(19) 

**Europäisches Patentamt**
**European Patent Office**
**Office européen des brevets**

(11) **EP 4 779 715 A1**

(12) 
# EUROPEAN PATENT APPLICATION
published in accordance with Art. 153(4) EPC

(43) Date of publication:
**22.07.2026 Bulletin 2026/30**

(21) Application number: **24864041.9**

(22) Date of filing: **03.04.2024**

(51) International Patent Classification (IPC):
*H01M 4/505* (2010.01)       *H01M 4/525* (2010.01)
*H01M 4/485* (2010.01)       *H01M 10/054* (2010.01)

(52) Cooperative Patent Classification (CPC):
**H01M 4/131; H01M 4/485; H01M 4/505;**
**H01M 4/525; H01M 10/054;** Y02E 60/10

(86) International application number:
**PCT/CN2024/085929**

(87) International publication number:
**WO 2025/055315 (20.03.2025 Gazette 2025/12)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **14.09.2023 CN 202311186588**

(71) Applicant: **Contemporary Amperex Technology**
**Co., Limited**
**Ningde, Fujian 352100 (CN)**

(72) Inventors:
• **WU, Kai**
  **Ningde, Fujian 352100 (CN)**

• **ZHANG, Qiyu**
  **Ningde, Fujian 352100 (CN)**
• **WU, Qi**
  **Ningde, Fujian 352100 (CN)**
• **CHEN, Qiang**
  **Ningde, Fujian 352100 (CN)**
• **LIU, Na**
  **Ningde, Fujian 352100 (CN)**

(74) Representative: **Ziebig Hengelhaupt Intellectual**
**Property Attorneys**
**Patentanwaltskanzlei PartGmbB**
**Leipziger Straße 49**
**10117 Berlin (DE)**

(54) **POSITIVE ELECTRODE ACTIVE MATERIAL AND PREPARATION METHOD THEREFOR, POSITIVE ELECTRODE SHEET, SECONDARY BATTERY, AND ELECTRIC DEVICE**

(57) Provided in the present application are a positive electrode active material and a preparation method therefor, a positive electrode sheet, a secondary battery, and an electric device. The positive electrode active material comprises a first positive electrode active material and a second positive electrode active material, wherein the first positive electrode active material is a nickel-iron-manganese-copper quaternary sodium battery positive electrode active material; and the chemical formula of the second positive electrode active material is $Na_{a2}[Ni_{b2}Fe_{c2}Mn_{d2}M_{e2}]O_2$, where $0.8 \leq a2 < 1$, $0.01 \leq b2 < 0.35$, $0.01 \leq c2 < 0.35$, $0.01 \leq d2 < 0.35$, $0 \leq e2 < 0.1$, $b2+c2+d2+e2=1$, and the element M comprises any one or more of Zn, Ti, Zr, Mg, La, Y, Co, Cr, Al, K, V, Mo, W, Sr, Ta, Nb, or Ca.

FIG. 1

**Description**

**CROSS-REFERENCE TO RELATED APPLICATIONS**

The present application claims priority to the Chinese patent application 202311186588.X filed on September 14, 2023 and entitled "POSITIVE ELECTRODE ACTIVE MATERIAL AND PREPARATION METHOD THEREOF, POSITIVE ELECTRODE SHEET, SECONDARY BATTERY, AND ELECTRIC APPARATUS", which is incorporated herein by reference in its entirety.

**TECHNICAL FIELD**

The present application relates to the technical field of batteries, in particular to a positive electrode active material, a preparation method thereof, a positive electrode sheet, a secondary battery, and an electric apparatus.

**BACKGROUND**

After nearly ten years of extensive research for sodium-ion batteries by various parties, positive electrode active materials mainly based on systems such as transition metal oxides, Prussian blue, and polyanion phosphates have been formed, where transition metal oxides have relatively high specific capacity, but their poor cycling performance and low energy density have always been important factors affecting the application of positive electrode active materials for sodium-ion batteries.

At present, common transition metal oxides are mainly divided into two types: one is nickel-iron-manganese-based oxides, and the other is nickel-manganese-iron-copper-based oxides containing the copper element. For either of these two types, positive electrode active materials for sodium-ion batteries with different performances can be obtained by changing different ratios of the nickel, iron, manganese, and copper elements.

To improve the cycling performance of transition metal oxides, transition metal oxides with a single-crystal morphology have emerged. For a single-crystal quaternary positive electrode active material based on nickel-manganese-iron-copper oxides, the Cu element therein can improve the structural stability of the material and also improve the cycling performance of the material; moreover, the Cu element has a fluxing effect, which can promote the growth of single crystal particles, thereby reducing a specific surface area of the material and interface side reactions, and improving the cycling performance. However, a low gram capacity of the nickel-iron-manganese-copper quaternary positive electrode active material limits the energy density of the material.

**SUMMARY**

The present application provides a positive electrode active material and a preparation method thereof, a positive electrode sheet, a secondary battery, and an electric apparatus, to increase the energy density of the nickel-iron-manganese-copper quaternary positive electrode active material.

According to a first aspect, the present application provides a positive electrode active material, including a first positive electrode active material and a second positive electrode active material. The first positive electrode active material is a nickel-iron-manganese-copper quaternary sodium battery positive electrode active material, and a chemical formula of the second positive electrode active material is $Na_{a2}[Ni_{b2}Fe_{c2}Mn_{d2}M_{e2}]O_2$, where $0.8 \leq a2 < 1$, $0.01 \leq b2 < 0.35$, $0.01 \leq c2 < 0.35$, $0.01 \leq d2 < 0.35$, $0 \leq e2 < 0.1$, $b2+c2+d2+e2=1$, and the M element includes any one or more of Zn, Ti, Zr, Mg, La, Y, Co, Cr, Al, K, V, Mo, W, Sr, Ta, Nb, or Ca. Optionally, the M element includes any one or more of Zn, Ti, Zr, Mg, Al, Co, or Ca. Optionally, $0.9 < a2 < 0.95$, $0.01 \leq b2 < 0.33$, $0.01 \leq c2 < 0.33$, $0.01 \leq d2 < 0.33$, and $0.01 \leq e2 < 0.08$. Further optionally, $0.02 \leq e2 < 0.08$.

In the positive electrode active material of the present application, the first positive electrode active material contains the copper element and therefore has a stable structure and good cycling performance. The second positive electrode active material has a higher gram capacity than the first positive electrode active material. Therefore, the two are mixed to compensate for the defect of low gram capacity of the first positive electrode active material, thereby enabling the positive electrode active material to achieve a high energy density, that is, the gram capacity.

In any implementation of the first aspect, the chemical formula of the above nickel-iron-manganese-copper quaternary sodium battery positive electrode active material is $Na_{a1}[Ni_{b1}Fe_{c1}Mn_{di}Cu_{e1}]O_2$, where $0.8 \leq a1 < 1$, $0.01 \leq b1 < 0.33$, $0.01 \leq c1 < 0.33$, $0.01 \leq d1 < 0.33$, $0.02 \leq e1 < 0.2$, and $b1+c1+d1+e1=1$. Optionally, $0.9 < a1 < 0.95$, and $0.06 \leq e1 < 0.15$. This further improves the cycling performance of the positive electrode active material.

In any implementation of the first aspect, optionally, in each gram of the positive electrode active material, a total molar amount of Cu atoms is e1', a total molar amount of the M element is e2', and $0.5 \leq e1'/e2' \leq 200$. Preferably $1 \leq e1'/e2' \leq 100$, and further preferably $4 \leq e1'/e2' \leq 40$. This is more conducive to improving the cycling performance and capacity of the positive electrode active material.

In any implementation of the first aspect, a mass percentage of the Cu element in the above positive electrode active material is 0.5% to 12%, preferably 3.5% to 4.7%. This allows for a more appropriate proportion of the first positive electrode active material and the second positive electrode active material, thereby significantly improving the cycling performance and energy density of the positive electrode active material relative to a single material.

In any implementation of the first aspect, an average mass percentage of the Cu element in the positive electrode active material with a particle size less than or equal to $D_v10$ is m1, an average mass percentage of the Cu element in the positive electrode active material with a particle size greater than or equal to $D_v90$ is m2, and m1<m2. This more effectively improves the cycling performance and energy density of the positive electrode active material.

In any implementation of the first aspect, a volume-based particle size of the above positive electrode active material satisfies any one or more of the following conditions: (1) the $D_v10$ is 0.5 $\mu$m to 2 $\mu$m; (2) $D_v50$ is 7 $\mu$m to 11 $\mu$m; and (3) the $D_v90$ is 14 $\mu$m to 20 $\mu$m. The above volume-based particle size distribution allows for better gradation between particles, which is more conducive to increasing the compacted density.

In any implementation of the first aspect, a volume-based particle size distribution curve of the above positive electrode active material includes a first peak type and a second peak type, a peak particle size of the first peak type is $D_1$, a peak particle size of the second peak type is $D_2$, and $D_1<D_2$. This further increases the energy density of the positive electrode active material composition.

In any implementation of the first aspect, an average mass percentage of the Cu element in the positive electrode active material with a particle size less than or equal to $D_1$ is m3, an average mass percentage of the Cu element in the positive electrode active material with a particle size greater than or equal to $D_2$ is m4, and m3<m4. This more effectively improves the cycling performance and energy density of the positive electrode active material.

In any implementation of the first aspect, peak positions of fitted peaks are set at $D_1$ and $D_2$ respectively, and the Origin software is used to perform a peak fitting process on the volume-based particle size distribution curve of the positive electrode active material based on Gaussian function, to obtain at least a first fitted peak type and a second fitted peak type, where a peak particle size of the first fitted peak type is $D_1$, a peak particle size of the second fitted peak type is $D_2$, a particle size of the first positive electrode active material is in a particle size range corresponding to the second fitted peak type, and a particle size of the second positive electrode active material is in a particle size range corresponding to the first fitted peak type. This more effectively improves the cycling performance and energy density of the positive electrode active material.

In any implementation of the first aspect, an average particle size $D_1'$ of the above first positive electrode active material is 6 $\mu$m to 15 $\mu$m, optionally 8 $\mu$m to 12 $\mu$m; and/or an average particle size $D_2'$ of the second positive electrode active material is 2 $\mu$m to 5.5 $\mu$m, optionally 3 $\mu$m to 4 $\mu$m. This more effectively improves the cycling performance and energy density of the positive electrode active material.

In any implementation of the first aspect, the peak positions of the fitted peaks are set at $D_1'$ and $D_2'$ respectively, the Origin software is used to perform a peak fitting process on the volume-based particle size distribution curve of the positive electrode active material based on Gaussian function, and positions of the fitted peaks are kept unchanged during the fitting process, to obtain a small-particle fitted peak type and a large-particle fitted peak type, where a particle size of the first positive electrode active material is in a particle size range corresponding to the large-particle fitted peak type, and a particle size of the second positive electrode active material is in a particle size range corresponding to the small-particle fitted peak type. This more effectively improves the cycling performance and energy density of the positive electrode active material.

In any implementation of the first aspect, the above first positive electrode active material and second positive electrode active material each independently include a single crystal material or have a single crystal core.

In any implementation of the first aspect, the above first positive electrode active material and second positive electrode active material each independently have an O3 crystal phase. This further increases the energy density of the positive electrode active material.

In any implementation of the first aspect, morphologies of the above first positive electrode active material and second positive electrode active material each independently include any one or more of a flake morphology, a spherical morphology, or a quasi-spherical morphology.

In any implementation of the first aspect, in XRD spectra of the above first positive electrode active material and second positive electrode active material, a (003) diffraction peak, a (101) diffraction peak, and a (104) diffraction peak correspond to grain sizes of $D_{003}$, $D_{101}$, and $D_{104}$ respectively, and satisfy $1.5<D_{104}/D_{003}<1.7$, further optionally $1.55<D_{104}/D_{003}<1.65$, or satisfy $0.9<D_{101}/D_{003}<1.2$, further optionally $1.05<D_{101}/D_{003}<1.15$. A ratio of the grain sizes satisfying the above conditions makes the positive electrode active material have a higher particle roundness, which is more conducive to increasing the compacted density of the positive electrode active material.

In any implementation of the first aspect, a mass ratio of the first positive electrode active material and the second positive electrode active material is 5:5 to 9:1, optionally 6:4 to 8:2.

In any implementation of the first aspect, at least part of a surface of the above first positive electrode active material and at least part of a surface of the second positive electrode active material each independently include a coating layer. The coating layer includes a sodium phosphate salt. Optionally, the sodium phosphate salt includes $NaH_2PO_4$, $Na_2HPO_4$, $Na_3PO_4$, or $(NaPO_3)n$. Optionally, a weight content of the sodium phosphate salt in the positive electrode active material is 1000 ppm to 30000 ppm, optionally 5000 ppm to 20000 ppm. This results in consumption of residual Na on the material surface and improves the cycling and sodium storage stability of the positive electrode active material.

In any implementation of the first aspect, a powder compacted density of the above positive electrode active material under a pressure of 3 tons is greater than or equal to 3.1 $g/cm^3$. Optionally, the powder compacted density is greater than or equal to 3.3 $g/cm^3$. The improvement in compacted density enables the energy density of the material to be increased.

According to a second aspect, the present application provides a preparation method of any positive electrode active material of the first aspect. The preparation method includes: preparing a first positive electrode active material: mixing a Ni salt solution, a Fe salt solution, a Cu salt solution, and an Mn salt solution at a set ratio to form a first mixed salt solution, adding the first mixed salt solution, a first precipitant, and a first complexing agent to a reaction vessel, controlling the pH value and reaction temperature of the materials in the reaction vessel to undergo a co-precipitation reaction, to obtain a first positive electrode active material precursor, where the pH value is recorded as $pH_1$, and $pH_1$ is 9 to 12, mixing the first positive electrode active material precursor with a first sodium salt in proportion to form a first mixture, and performing first calcination treatment on the first mixture to obtain the first positive electrode active material; preparing a second positive electrode active material: mixing a Ni salt solution, a Fe salt solution, an Mn salt solution, and an optional salt solution containing an M element at a set ratio to form a second mixed salt solution, pumping the second mixed salt solution, a second precipitant, and a second complexing agent into a reaction vessel, controlling the pH value and reaction temperature of the materials in the reaction vessel to undergo a co-precipitation reaction, to obtain second positive electrode active material precursor, where the pH value is recorded as $pH_2$, and $pH_2$ is 11 to 14, mixing the second positive electrode active material precursor with a second sodium salt in proportion to form a second mixture, and performing second calcination treatment on the first mixture to obtain the second positive electrode active material; and mixing the first positive electrode active material and the second positive electrode active material to obtain the positive electrode active material. In the preparation method of the present application, the first positive electrode active material and the second positive electrode active material are separately prepared, making it easier to control their respective characteristics such as the composition, morphology, and crystal phase, achieving high flexibility.

In any implementation of the second aspect, the above Ni salt, Fe salt, Mn salt, Cu salt, and M salt each include one or a mixture of several of their respective sulfates, nitrates, oxalates, or chlorides; the first precipitant and second precipitant each independently include an aqueous solution of one or a mixture of several of sodium hydroxide, sodium carbonate, potassium carbonate, or potassium hydroxide; and the first complexing agent and second complexing agent each independently include an aqueous solution of one or a mixture of several of ammonia water, ammonium chloride, ammonium sulfate, ammonium carbonate, ammonium bicarbonate, or citric acid. Optionally, a concentration of the first complexing agent is 1 mol/L to 2 mol/L, and a concentration of the second complexing agent is 0.5 mol/L to 1 mol/L.

In any implementation of the second aspect, the above first calcination treatment includes a first primary calcination process performed at a first temperature and a first secondary calcination process performed at a second temperature, and the first temperature is lower than the second temperature; optionally, the first temperature of the first primary calcination is 700°C to 900°C, and a temperature maintaining time is 3 h to 10 h; optionally, the second temperature of the first secondary calcination is 850°C to 1200°C, further optionally 900°C to 1000°C, and a temperature maintaining time is 8 h to 20 h, further optionally 12 h to 18 h; and/or a molar ratio of sodium in the first sodium salt to metal elements in the first positive electrode active material precursor is 0.8 to 0.95, optionally 0.9 to 0.93. The first calcination treatment is first performed at a low sintering temperature and then performed at a high sintering temperature, which removes moisture and also facilitates particle size growth.

In any implementation of the second aspect, the above second calcination treatment includes a second primary calcination process performed at a third temperature and a second secondary calcination process performed at a fourth temperature, and the third temperature is higher than the fourth temperature; optionally, the third temperature of the second primary calcination is 850°C to 1000°C, and a temperature maintaining time is 3 h to 8 h; optionally, the fourth temperature of the second secondary calcination is 700°C to 950°C, further optionally 800°C to 920°C, and a temperature maintaining time is 8 h to 20 h, further optionally 9 h to 15 h; and/or a molar ratio of sodium in the second sodium salt to metal elements in the second positive electrode active material precursor is 0.8 to 0.95, optionally 0.9 to 0.93. The second calcination treatment is first performed at a high calcination temperature and then performed at a low calcination temperature, which promotes the reaction as well as reduces the particle size and inhibits particle growth.

In any implementation of the second aspect, the above preparation method further includes: mixing a phosphate compound, the first positive electrode active material, and the second positive electrode active material to form a mixed base material, where optionally, a ratio of a weight of the phosphate compound to a total weight of the first positive electrode active material and the second positive electrode active material is 1000 ppm to 30000 ppm, optionally 5000 ppm to 20000 ppm, and the phosphate compound includes one or a mixture of several of $NH_4H_2PO_4$, $(NH_4)_2HPO_4$, $(NH_4)_2H_2P_2O_7$, $NH_4H_3P_2O_7$, $NaH_2PO_4$, $Na_2HPO_4$, $Na_3PO_4$, or $(NaPO_3)n$; and performing third calcination on the mixed base material to obtain the positive electrode active material, where optionally, the third calcination is performed at a temperature of 200°C to 500°C, preferably at 300°C to 400°C, for 5 h to 15 h, preferably for 7 h to 10 h.

According to a third aspect, the present application provides a positive electrode sheet, including a positive electrode current collector and a positive electrode film layer disposed on at least one side of the positive electrode current collector. The positive electrode film layer includes a positive electrode active material. The positive electrode active material includes any positive electrode active material provided in the first aspect. Optionally, a compacted density of the positive electrode sheet is greater than or equal to 3.1 $g/cm^3$.

According to a fourth aspect, the present application provides a secondary battery, including a positive electrode sheet, a negative electrode sheet, and an electrolyte. The positive electrode sheet includes a positive electrode active material, and the positive electrode active material includes any positive electrode active material provided in the first aspect.

According to a fifth aspect, the present application provides an electric apparatus, including an electric apparatus. The electric apparatus includes any secondary battery provided in the fourth aspect.

**BRIEF DESCRIPTION OF DRAWINGS**

To more clearly illustrate the technical solutions of embodiments of the present application, the drawings to be used in the embodiments of the present application are briefly introduced below. Obviously, the drawings described below are only some embodiments of the present application. For those of ordinary skill in the art, other drawings can also be obtained based on these drawings without creative effort.

FIG. 1 is a scanning electron microscope image of a first positive electrode active material substrate according to Example 1.
FIG. 2 is an XRD spectrum of the substrate of the first positive electrode active material substrate according to Example 1.
FIG. 3 is a scanning electron microscope image of a second positive electrode active material substrate in Example 1.
FIG. 4 is an XRD spectrum of the second positive electrode active material substrate according to Example 1.
FIG. 5 is a schematic diagram of a secondary battery according to an embodiment of the present application.
FIG. 6 is an exploded view of the secondary battery according to an embodiment of the present application shown in FIG. 5.
FIG. 7 is a schematic diagram of a battery module according to an embodiment of the present application.
FIG. 8 is a schematic diagram of a battery pack according to an embodiment of the present application.
FIG. 9 is an exploded view of the battery pack according to an embodiment of the present application shown in FIG. 8.
FIG. 10 is a schematic diagram of an electric apparatus using a secondary battery of the present application as a power source according to an embodiment.

In the drawings, the figures are not drawn to actual scale.

Description of reference numerals:

1. battery pack; 2. upper box body; 3. lower box body; 4. battery module; 5. secondary battery; 51. shell; 52. electrode assembly; and 53. top cover assembly.

DESCRIPTION OF EMBODIMENTS

The embodiments of the present application are further described in detail below in conjunction with the accompanying drawings and embodiments. The detailed description of the following embodiments and the accompanying drawings are used to exemplarily illustrate the principles of the present application, but cannot be used to limit the scope of the present application. That is, the present application is not limited to the described embodiments.

The following specifically provides embodiments of a positive electrode active material and a preparation method thereof, a secondary battery, and an electric apparatus disclosed in the present application with appropriate reference to the accompanying drawings. However, there may be cases where unnecessary detailed descriptions are omitted. For example, there may be cases where detailed descriptions of well-known matters and repeated descriptions of actually identical structures are omitted. This is to avoid unnecessarily lengthening the following descriptions and to facilitate understanding by those skilled in the art. In addition, the accompanying drawings and the following descriptions are provided for those skilled in the art to fully understand the present application and are not intended to limit the subject matter described in the claims.

The "range" disclosed in the present application is defined in the form of a lower limit and an upper limit, the given scope is defined by selecting a lower limit and an upper limit, and the selected lower limit and upper limit define the boundaries of a specific range. A range defined in this way may include or may not include endpoints, and the endpoints may be arbitrarily combined, that is, any lower limit can be combined with any upper limit to form a range. For example, if ranges of 60-120 and 80-110 are listed for a specific parameter, it is understood that ranges of 60-110 and 80-120 are also contemplated. In addition, if minimum range values listed are 1 and 2 and maximum range values listed are 3, 4, and 5, the following ranges can all be contemplated: 1-3, 1-4, 1-5, 2-3, 2-4, and 2-5. In the present application, unless otherwise specified, a numerical range "a-b" represents an abbreviated representation of any real number combination between a and b, where a and b are both real numbers. For example, a numerical range "0-5" indicates that all real numbers between "0-5" have been fully listed herein, and "0-5" is just an abbreviated representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with each other to form a new technical solution.

Unless otherwise specified, all technical characteristics and optional technical characteristics mentioned in the embodiments of the present application can be combined with each other to form a new technical solution.

Unless otherwise specified, all steps in the present application can be performed sequentially or randomly, preferably sequentially. For example, the method includes steps (a) and (b), indicating that the method may include steps (a) and (b) performed sequentially, or may include steps (b) and (a) performed sequentially. For example, the mentioned method may further include step (c), indicating that step (c) can be added to the method in any order, for example, the method may include steps (a), (b), and (c), may include steps (a), (c), and (b), may include steps (c), (a), and (b), or the like.

Unless otherwise specified, the "include" and "contain" mentioned in the present application have an open-ended meaning. For example, the "include" and "contain" may mean that other components not listed can also be included or contained.

Unless otherwise specified, in the present application, the term "or" is inclusive. For example, the following conditions each satisfy the condition "A or B": A is true (or present) and B is false (or absent); A is false (or absent) and B is true (or present); or both A and B are true (or present).

[Secondary battery]

A secondary battery, also known as a rechargeable battery or storage battery, refers to a battery that can continue to be used by activating an active material through charging after the battery is discharged.

Typically, a secondary battery includes a positive electrode sheet, a negative electrode sheet, and an electrolyte. During charging and discharging processes of the battery, active ions (such as lithium ions) are intercalated and deintercalated back and forth between the positive electrode sheet and the negative electrode sheet. The electrolyte mainly plays a role in conducting active ions between the positive electrode sheet and the negative electrode sheet.

[Positive electrode active material]

Since the nickel-iron-manganese-copper quaternary positive electrode active material has a low gram capacity, the energy density of the material is limited. To increase the energy density of a positive electrode active material, in a first embodiment of the present application, a positive electrode active material is provided, including a first positive electrode active material and a second positive electrode active material. The first positive electrode active material is a nickel-iron-manganese-copper quaternary sodium battery positive electrode active material, and a chemical formula of the second positive electrode active material is $Na_{a2}[Ni_{b2}Fe_{c2}Mn_{d2}M_{e2}]O_2$, where $0.8 \leq a2 < 1$, $0.01 \leq b2 < 0.35$, $0.01 \leq c2 < 0.35$, $0.01 \leq d2 < 0.35$, $0 \leq e2 < 0.1$, $b2+c2+d2+e2=1$, and the M element includes any one or more of Zn, Ti, Zr, Mg, La, Y, Co, Cr, Al, K, V, Mo, W, Sr, Ta, Nb, or Ca. Optionally, the M element includes any one or more of Zn, Ti, Zr, Mg, Al, Co, or Ca. Optionally, $0.9 < a2 < 0.95$, $0.01 \leq b2 < 0.33$, $0.01 \leq c2 < 0.33$, $0.01 \leq d2 < 0.33$, and $0.01 \leq e2 < 0.08$. Further optionally, $0.02 \leq e2 < 0.08$.

In the positive electrode active material of the present application, the first positive electrode active material contains the copper element and therefore has a stable structure and good cycling performance. The second positive electrode active material has a higher gram capacity than the first positive electrode active material. Therefore, the two are mixed to compensate for the defect of low gram capacity of the first positive electrode active material, thereby enabling the positive electrode active material to achieve a high energy density, that is, the gram capacity.

In some embodiments, a2 may be 0.8, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, or 0.999. In some embodiments, b2 may be 0.01, 0.05, 0.1, 0.15, 0.2, 0.25, 0.3, 0.33, or 0.34. In some embodiments, c2 may be 0.01, 0.05, 0.1, 0.15, 0.2, 0.25, 0.3, 0.33, or 0.34. In some embodiments, d2 may be 0.01, 0.05, 0.1, 0.15, 0.2, 0.25, 0.3, 0.33, or 0.34. In some embodiments, e2 may be 0.01, 0.02, 0.03, 0.04, 0.05, 0.06, 0.07, 0.75, or 0.79.

The nickel-iron-manganese-copper quaternary sodium battery positive electrode active material used in some embodiments of the present application may be a conventional type of positive electrode active material. To further exert the improvement effect of copper on the structural stability of the positive electrode active material, in some embodiments, a chemical formula of the nickel-iron-manganese-copper quaternary sodium battery positive electrode active material is $Na_{a1}[Ni_{b1}Fe_{c1}Mn_{d1}Cu_{e1}]O_2$, where $0.8 \leq a1 < 1$, $0.01 \leq b1 < 0.33$, $0.01 \leq c1 < 0.33$, $0.01 \leq d1 < 0.33$, $0.02 \leq e1 < 0.2$, and $b1+c1+d1+e1=1$. In some embodiments, optionally, $0.9 < a1 < 0.95$, and $0.06 \leq e1 < 0.15$, which further controls a content of the copper element while selecting high sodium, so that the cycling performance of the positive electrode active material is further improved.

In some embodiments, a1 may be 0.8, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, or 0.999. In some embodiments, b1 may be 0.01, 0.05, 0.1, 0.15, 0.2, 0.25, 0.3, or 0.32. In some embodiments, c1 may be 0.01, 0.05, 0.1, 0.15, 0.2, 0.25, 0.3, or 0.32. In some embodiments, d1 may be 0.01, 0.05, 0.1, 0.15, 0.2, 0.25, 0.3, or 0.32. In some embodiments, e1 may be 0.02, 0.03, 0.04, 0.05, 0.06, 0.07, 0.08, 0.09, 0.1, 0.12, 0.14, 0.15, 0.17, 0.18, or 0.19.

In some embodiments of the present application, optionally, in each gram of the positive electrode active material, a total molar amount of Cu atoms is e1', a total molar amount of the M element is e2', and $0.5 \leq e1'/e2' \leq 200$. Preferably, $1 \leq e1'/e2' \leq 100$. Further preferably, $4 \leq e1'/e2' \leq 40$. By controlling the above e1' and e2', a percentage of the Cu element in the first positive electrode active material and a content of the Mn element in the second positive electrode active material are in more appropriate ranges, so that the first positive electrode active material achieves high cycling stability. In addition, limiting the content of the M element not only improves the capacity but also maximizes the cycling stability of the second positive electrode active material, making the first positive electrode active material and the second positive electrode active material form a better synergistic effect, which is more conducive to improving the cycling performance and capacity of the positive electrode active material.

In some embodiments of the present application, a mass percentage of the Cu element in the above positive electrode active material is 0.5% to 12%, preferably 3.5% to 4.7%. By limiting the percentage of the Cu element in the positive electrode active material, a percentage of the first positive electrode active material is limited. Within this percentage range of the Cu element, a proportion of the first positive electrode active material and the second positive electrode active material is more appropriate, thereby significantly improving the cycling performance and energy density of the positive electrode active material relative to a single material.

In the present application, an inductively coupled plasma spectrometer (ICP) test is used to detect each element composition in the positive electrode active material; a scanning electron microscope (SEM) is used in combination with an X-ray energy spectrometer (EDS) test to test element distribution on particle surfaces, where particles where the Cu element is distributed are the first positive electrode active material, and particles containing a doped M element are the second positive electrode active material; and an EDS is used to test the respective element percentages of the first positive electrode active material and the second positive electrode active material.

In some embodiments, an average mass percentage of the Cu element with a particle size less than or equal to $D_v10$ is m1, an average mass percentage of the Cu element in the positive electrode active material with a particle size greater than or equal to $D_v90$ is m2, and m1 < m2. Under the limitation of the above conditions, the positive electrode active material having positive electrode active material particles with a larger particle size is mostly the first positive electrode active material containing Cu, and the positive electrode active material having particles with a smaller particle size is mostly the second positive electrode active material. The first positive electrode active material with larger particles has better structural stability and fewer interface side reactions, providing good cycling performance for the positive electrode active material; and the second positive electrode active material with smaller particles utilizes the advantage of its small particle size to provide a high energy density for the positive electrode active material. The gradation of their particle sizes more effectively improves the cycling performance and energy density of the positive electrode active material.

The above average mass percentage of the Cu element is obtained through calculation in a way of scanning single particles in an EDS mode under a scanning electron microscope, detecting the percentage of the Cu element in each single particle, and obtaining an average value after multiple single particles are scanned.

In some embodiments of the present application, a volume-based particle size of the above positive electrode active material satisfies any one or more of the following conditions: (1) the $D_v10$ is 0.5 $\mu$m to 2 $\mu$m; (2) the $D_v50$ is 7 $\mu$m to 11 $\mu$m; and (3) the $D_v90$ is 14 $\mu$m to 20 $\mu$m. This volume-based particle size distribution allows for better gradation between particles, which is more conducive to increasing the compacted density.

The volume-based particle size distribution of the above positive electrode active material is determined using a particle size testing device such as a laser particle size analyzer.

While energy density improvement is achieved through composition coordination of the first positive electrode active material and the second positive electrode active material, in some embodiments, a volume-based particle size distribution curve of the above positive electrode active material includes a first peak type and a second peak type, where a peak particle size of the first peak type is $D_1$, a peak particle size of the second peak type is $D_2$, and $D_1 < D_2$. The positive electrode active material achieves particle gradation through coordination of a large particle size and a small particle size, which is conducive to further increasing the compacted density of the positive electrode active material, thereby further increasing the energy density of the positive electrode active material composition.

In some embodiments, an average mass percentage of the Cu element in the positive electrode active material with a particle size less than or equal to $D_1$ is m3, an average mass percentage of the Cu element in the positive electrode active material with a particle size greater than or equal to $D_2$ is m4, and m3<m4. Under the limitation of the above conditions, the positive electrode active material having particles with a larger particle size (greater than or equal to $D_2$) is mostly the first positive electrode active material containing Cu, and the positive electrode active material having particles with a smaller particle size (particle size less than or equal to $D_1$) is mostly the second positive electrode active material. The first positive electrode active material with larger particles has better structural stability and fewer interface side reactions, providing good cycling performance for the positive electrode active material; and the second positive electrode active material with smaller particles utilizes the advantage of its small particle size to provide a high energy density for the positive electrode active material. The gradation of their particle sizes more effectively improves the cycling performance and energy density of the positive electrode active material.

In some embodiments, peak positions of fitted peaks are set at $D_1$ and $D_2$ respectively, and the Origin software is used to perform a peak fitting process on the volume-based particle size distribution curve of the positive electrode active material based on Gaussian function, to obtain at least a first fitted peak type and a second fitted peak type, where a peak particle size of the first fitted peak type is $D_1$, a peak particle size of the second fitted peak type is $D_2$, a particle size of the first positive electrode active material is in a particle size range corresponding to the second fitted peak type, and a particle size of the second positive electrode active material is in a particle size range corresponding to the first fitted peak type. Under the limitation of the above conditions, when the second positive electrode active material is mixed with the first positive electrode active material, gaps between the particles of the second positive electrode active material are filled more fully, thereby more effectively improving the cycling performance and energy density of the positive electrode active material.

In some embodiments of the present application, an average particle size $D_1$' of the first positive electrode active material is 6 $\mu$m to 15 $\mu$m, optionally 8 $\mu$m to 12 $\mu$m; and an average particle size $D_2$' of the second positive electrode active material is 2 $\mu$m to 5.5 $\mu$m, optionally 3 $\mu$m to 4 $\mu$m. The second positive electrode active material, as a small-particle-size positive electrode active material, has a better filling effect on gaps between the particles of the first positive electrode active material, more significantly improving the cycling performance and energy density of the positive electrode active material.

When the positive electrode active material is used as a test object, the positive electrode active material is observed under a scanning electron microscope at a magnification of 3000 times, and an EDS element mapping test is performed simultaneously. The first positive electrode active material and the second positive electrode active material are marked according to whether there is the Cu element in an EDS result. In the same field of view, 30 first positive electrode active materials and 30 second positive electrode active materials are respectively selected to measure their respective particle sizes, and 5 regions are randomly selected for the above operations, to obtain average particle sizes $D_1$' and $D_2$' of the first positive electrode active material and the second positive electrode active material through calculation.

In some embodiments of the present application, peak positions of fitted peaks are set at $D_1$' and $D_2$' respectively, the Origin software is used to perform a peak fitting process on the volume-based particle size distribution curve of the positive electrode active material based on Gaussian function, and positions of the fitted peaks are kept unchanged during the fitting process, to obtain a small-particle fitted peak type and a large-particle fitted peak type, where a particle size of the first positive electrode active material is in a particle size range corresponding to the large-particle fitted peak type, and a particle size of the second positive electrode active material is in a particle size range corresponding to the small-particle fitted peak type. When no obviously-distinct peak particle sizes are shown in the volume-based particle size distribution curve of the positive electrode active material, after peak fitting is performed based on the above average particle sizes $D_1$' and $D_2$', when the obtained fitted peak types satisfy the above conditions, the gaps between the particles of the second positive electrode active material are more fully filled while the second positive electrode active material is mixed with the first positive electrode active material, thereby more effectively improving the cycling performance and energy density of the positive electrode active material.

The first positive electrode active material and the second positive electrode active material of the present application may be single crystal materials, quasi-single crystal materials, or secondary spherical particles. In some embodiments of the present application, the above first positive electrode active material and second positive electrode active material each independently include a single crystal material or a single crystal core. The single crystal structure has better structural stability and therefore can further improve the cycling stability of the material.

To further increase the energy density of the positive electrode active material of the present application, in some embodiments of the present application, the first positive electrode active material and the second positive electrode active material each independently have an O3 crystal phase.

In some embodiments of the present application, morphologies of the above first positive electrode active material and second positive electrode active material each independently include any one or more of a flake morphology, a spherical morphology, or a quasi-spherical morphology. During a compacting process for flake materials, particles support each other, resulting in a lower compacted density thereof as compared to spherical and quasi-spherical materials. In some embodiments, the morphologies of the above first positive electrode active material and second positive electrode active material each independently include any one or more of a spherical morphology or a quasi-spherical morphology.

In some embodiments of the present application, to increase the roundness of the first positive electrode active material and/or the second positive electrode active material, optionally, in XRD spectra of the first positive electrode active material and the second positive electrode active material, a (003) diffraction peak, a (101) diffraction peak, and a (104) diffraction peak correspond to grain sizes of $D_{003}$, $D_{101}$, and $D_{104}$ respectively, and satisfy $1.5 < D_{104}/D_{003} < 1.7$, further optionally $1.55 < D_{104}/D_{003} < 1.65$, or satisfy $0.9 < D_{101}/D_{003} < 1.2$, further optionally $1.05 < D_{101}/D_{003} < 1.15$. For a sodium battery positive electrode active material with an O3 structure, the grain sizes corresponding to the (104), (101), and (003) diffraction peaks are related to particle thicknesses along the respective crystal planes, and a ratio of the corresponding grain sizes determines a thickness ratio of the material in different directions. The ratio of the grain sizes satisfying the above conditions makes the positive electrode active material have a higher particle roundness, which is more conducive to increasing the compacted density of the positive electrode active material.

The above XRD spectrum is obtained by the following method: an XRD spectrum test is performed using an X-ray diffractometer (Bruker D8 Advance), where a powder sample is first placed on a sample table, and the powder sample is flattened with a glass slide, then placed in a sample chamber, and irradiated with X-rays to obtain the XRD spectrum.

The corresponding grain size is calculated by the following method: a particle size of a corresponding crystal plane of the material is calculated according to the Scherrer formula. The Scherrer formula is $D=(K\cdot\gamma)/(B\cdot\cos\theta)$. K is the Scherrer constant, $\gamma$ is a wavelength of the X-rays, B is a full width at half maximum of a diffraction peak, $\theta$ is a Bragg diffraction angle, and D is a thickness in a direction perpendicular to the crystal plane.

In some embodiments of the present application, to improve a synergistic effect thereof, a mass ratio of the first positive electrode active material and the second positive electrode active material is 5:5 to 9: 1, optionally 6:4 to 8:2.

To consume residual Na on the material surface to improve the cycling and sodium storage stability, in some embodiments of the present application, the above first positive electrode active material and second positive electrode active material each independently include a coating layer, where the coating layer includes a sodium phosphate salt. Optionally, the sodium phosphate salt includes $NaH_2PO_4$, $Na_2HPO_4$, $Na_3PO_4$, or $(NaPO_3)_6$ (sodium hexametaphosphate). Optionally, a weight content of the sodium phosphate salt in the positive electrode active material is 1000 ppm to 30000 ppm, optionally 5000 ppm to 20000 ppm.

In some embodiments of the present application, a powder compacted density of the positive electrode active material under a pressure of 3 tons is greater than or equal to 3.1 $g/cm^3$. Optionally, the powder compacted density is greater than or equal to 3.3 $g/cm^3$. The improvement in compacted density enables the energy density of the material to be increased.

In a second embodiment of the present application, a preparation method of any of the above positive electrode active materials is provided. The preparation method includes:

preparing a first positive electrode active material: mixing a Ni salt solution, a Fe salt solution, a Cu salt solution, and an Mn salt solution at a set ratio to form a first mixed salt solution; pumping the first mixed salt solution, a first precipitant, and a first complexing agent into a reaction kettle, controlling the pH value and reaction temperature of the materials in the reaction kettle to undergo a co-precipitation reaction, to obtain a first positive electrode active material precursor, where the pH value is recorded as $pH_1$, and $pH_1$ is 9 to 12; mixing the first positive electrode active material precursor with a first sodium salt in proportion to form a first mixture; and performing first calcination treatment on the first mixture to obtain the first positive electrode active material;

preparing a second positive electrode active material: mixing a Ni salt solution, a Fe salt solution, an Mn salt solution, and an optional salt solution containing an M element at a set ratio to form a second mixed salt solution; pumping the second mixed salt solution, a second precipitant, and a second complexing agent into a reaction kettle; controlling the pH value and reaction temperature of the materials in the reaction kettle to undergo a co-precipitation reaction, to obtain a second positive electrode active material precursor, where the pH value is recorded as $pH_2$, and $pH_2$ is 11 to 14; mixing the second positive electrode active material precursor with a second sodium salt in proportion to form a second mixture; and performing second calcination treatment on the first mixture to obtain the second positive electrode active material; and

mixing the first positive electrode active material and the second positive electrode active material to obtain the positive electrode active material.

In the above preparation method, particle sizes of the precursors are controlled through co-precipitation processes, then the corresponding positive electrode active materials are formed through calcination, and after mixing, the positive electrode active material of the present application can be prepared. For calcination conditions, reference is made to conventional calcination conditions for sodium battery positive electrode active materials, for example, calcination is performed in air or oxygen atmosphere. In the preparation method of the present application, the first positive electrode active material and the second positive electrode active material are separately prepared, making it easier to control their respective characteristics such as the composition, morphology, and crystal phase, achieving high flexibility.

In addition to the particle size growth of the first positive electrode active material precursor due to copper element doping, the particle size can also be controlled by controlling the pH value, the amount of the complexing agent added, and the like in the co-precipitation process. In some embodiments, optionally $pH_1$ is 10 to 11.5, and $pH_2$ is 12 to 13.5.

For raw materials used in the present application, reference may also be made to commonly used raw materials in the preparation of sodium battery positive electrode active materials. In some embodiments of the present application, the above Ni salt, Fe salt, Mn salt, Cu salt, and M salt each include one or a mixture of several of their respective sulfates, nitrates, oxalates, or chlorides. The first precipitant and the second precipitant each independently include an aqueous solution of one or a mixture of several of sodium hydroxide, sodium carbonate, potassium carbonate, or potassium hydroxide; and the first complexing agent and second complexing agent each independently include an aqueous solution of one or a mixture of several of ammonia water, ammonium chloride, ammonium sulfate, ammonium carbonate, ammonium bicarbonate, or citric acid. Optionally, a concentration of the first complexing agent is 1 mol/L to 2 mol/L, and a concentration of the second complexing agent is 0.5 mol/L to 1 mol/L. The particle size of the precursor obtained by co-precipitation is further adjusted using the amount of the complexing agent added.

The calcination conditions cause differences in the morphology of the obtained positive electrode active material. In some embodiments, to obtain a first positive electrode active material with better roundness, the first calcination treatment is configured to include a first primary calcination process performed at a first temperature and a first secondary calcination process performed at a second temperature, and the first temperature is lower than the second temperature. Optionally, the first temperature of the first primary calcination is 700°C to 900°C, and a temperature maintaining time is 3 h to 10 h. Optionally, the second temperature of the first secondary calcination is 850°C to 1200°C, further optionally 900°C to 1000°C; and a temperature maintaining time is 8 h to 20 h, further optionally 12 h to 18 h. The first calcination treatment is first performed at a low sintering temperature and then performed at a high sintering temperature, which removes moisture and also facilitates particle size growth.

In some embodiments, a molar ratio of sodium in the first sodium salt to metal elements in the first positive electrode active material precursor is 0.8 to 0.95, optionally 0.9 to 0.93.

In some embodiments, to obtain a second positive electrode active material with better roundness, the second calcination treatment includes a second primary calcination process performed at a third temperature and a second secondary calcination process performed at a fourth temperature, and the third temperature is higher than the fourth temperature. Optionally, the third temperature of the second primary calcination is 850°C to 1000°C, and a temperature maintaining time is 3 h to 8 h. Optionally, the fourth temperature of the second secondary calcination is 700°C to 950°C, further optionally 800°C to 920°C; and a temperature maintaining time is 8 h to 20 h, further optionally 9 h to 15 h. The second calcination treatment is first performed at a high calcination temperature and then performed at a low calcination temperature, which promotes the reaction as well as reduces the particle size and inhibits particle growth.

In some embodiments, a molar ratio of sodium in the second sodium salt to metal elements in the second positive electrode active material precursor is 0.8 to 0.95, optionally 0.9 to 0.93.

In some embodiments of the present application, the above preparation method further includes: mixing a phosphate compound, the first positive electrode active material, and the second positive electrode active material to form a mixed base material, where optionally, a ratio of a weight of the phosphate compound to a total weight of the first positive electrode active material and the second positive electrode active material is 1000 ppm to 30000 ppm, optionally 5000 ppm to 20000 ppm, and the phosphate compound includes one or a mixture of several of $NH_4H_2PO_4$, $(NH_4)_2HPO_4$, $(NH_4)_2H_2P_2O_7$, $NH_4H_3P_2O_7$, $NaH_2PO_4$, $Na_2HPO_4$, $Na_3PO_4$, or $(NaPO_3)n$; and performing third calcination on the mixed base material to obtain the positive electrode active material, where optionally, the third calcination is performed at a temperature of 200°C to 500°C, preferably at 300°C to 400°C, for 5 h to 15 h, preferably for 7 h to 10 h. Through the above process, the residual sodium on the surfaces of the first positive electrode active material and the second positive electrode active material serving as a core structure is consumed. The prepared sodium phosphate salt coating layer can also protect the core structure, avoid direct contact between the core structure and the electrolyte, and reduce the occurrence of interface side reactions, thereby improving the cycling performance of the positive electrode active material.

In some embodiments of the present application, a positive electrode active material is further provided, and a chemical formula of the positive electrode active material is $Na_{a1}[Ni_{b1}Fe_{c1}Mn_{d1}G_{g1}]O_2$, where the G element includes any one or more of Cu, Zn, Ti, Zr, Mg, La, Y, Co, Cr, Al, K, V, Mo, W, Sr, Ta, Nb, or Ca. Optionally, the G element includes any one or more of Cu, Zn, Ti, Zr, Mg, Al, Co, or Ca. $0.8 \leq a1 < 1$, $0.01 \leq b1 < 0.33$, $0.01 \leq c1 < 0.33$, $0.01 \leq d1 < 0.33$, $0.001 \leq g1 < 0.2$, and $b1+c1+d1+g1=1$. Optionally, $0.9 < a1 < 0.95$, and $0.06 < e1 < 0.15$. The positive electrode active material satisfying these ranges has a higher gram capacity or stable cycling performance as compared to other sodium battery positive electrode active materials.

In some embodiments, the morphologies of the above positive electrode active material each independently includes any one or more of a flake morphology, a spherical morphology, or a quasi-spherical morphology, to increase the compacted density of the positive electrode active material.

In some embodiments, in an XRD spectrum of the above positive electrode active material, a (003) diffraction peak, a (101) diffraction peak, and a (104) diffraction peak correspond to grain sizes of $D_{003}$, $D_{101}$, and $D_{104}$ respectively, and satisfy $1.5 < D_{104}/D_{003} < 1.7$, further optionally $1.55 < D_{104}/D_{003} < 1.65$, or satisfy $0.9 < D_{101}/D_{003} < 1.2$, further optionally $1.05 < D_{101}/D_{003} < 1.15$, to further improve the roundness of the positive electrode active material.

In some embodiments, a powder compacted density of the above positive electrode active material is greater than or equal to 3.0 $g/cm^3$.

[Positive electrode sheet]

A positive electrode sheet typically includes a positive electrode current collector and a positive electrode film layer disposed on at least one side of the positive electrode current collector, where the positive electrode film layer includes a positive electrode active material.

In an example, the positive electrode current collector has two opposite surfaces in its thickness direction, and the positive electrode film layer is disposed on either or both of the two opposite surfaces of the positive electrode current collector.

In some embodiments, a metal foil or a composite current collector may be used as the positive electrode current collector. For example, aluminum foil may be used as the metal foil. The composite current collector may include a polymer material substrate and a metal layer formed on at least one surface of the polymer material substrate. The composite current collector can be formed by forming a metal material (aluminum, aluminum alloy, nickel, nickel alloy, titanium, titanium alloy, silver, silver alloy, and the like) on a polymer material substrate (such as a substrate of polypropylene (PP), polyethylene terephthalate (PET), polybutylene terephthalate (PBT), polystyrene (PS), and polyethylene (PE)).

In some embodiments, the positive electrode active material is any positive electrode active material provided in the above embodiments of the present application.

In some embodiments, the positive electrode film layer further optionally includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally includes a conductive agent. In an example, the conductive agent may include at least one of superconducting carbon, acetylene black, carbon black, Ketjen black, carbon dots, carbon nanotubes, graphene, and carbon nanofiber.

In some embodiments, the positive electrode sheet can be prepared by the following method: the above components for preparing the positive electrode sheet, such as the positive electrode active material, the conductive agent, the binder, and any other components, are dispersed in a solvent (such as N-methylpyrrolidone), to form a positive electrode slurry; and the positive electrode current collector is coated with the positive electrode slurry, followed by processes such as drying and cold pressing, to obtain the positive electrode sheet.

In some embodiments, a compacted density of the above positive electrode film layer is greater than or equal to 3.1 $g/cm^3$, which is tested by a method as follows.

A battery electrode sheet that meets processing requirements is obtained; a punching machine is used for punching, to obtain a positive electrode sheet with a diameter of 14 mm; an electronic balance and a desktop digital thickness gauge are used to measure a mass $m_c$ and a thickness $d_c$ of the positive electrode sheet respectively; the punching machine is used for punching, to obtain a sufficient number of aluminum foil base sheets with a diameter of 14 mm; and the electronic balance and the desktop digital thickness gauge are used to measure a mass mAl and a thickness dAl of the aluminum foil base sheet respectively.

Compacted density of positive electrode sheet $\rho_c = (m_c - mA1)/(\pi(\varphi/2) \times ((d_c - dA1)) \times 10^{\wedge 6}$,

where $\rho_c$ is the compacted density of the positive electrode sheet, measured in grams per cubic centimeter ($g/cm^3$);
$m_c$ is the mass of the positive electrode sheet, measured in grams (g);
mAl is the mass of the aluminum foil base sheet, measured in grams (g);
$\varphi$ is the diameter of the positive electrode sheet, measured in millimeters (mm);
$d_c$ is the thickness of the positive electrode sheet, measured in microns ($\mu$m); and
dAl is the thickness of the aluminum foil base sheet, measured in microns ($\mu$m).

During tests for the element composition, crystal type, and volume-based particle size distribution of the positive electrode active material in the positive electrode sheet, the positive electrode film layer on the positive electrode sheet is scraped off using a powder scraping method and crushed; then the binder therein is dissolved using a solvent, filtered, and dried; and then the corresponding tests are performed using the aforementioned methods.

[Negative electrode sheet]

A negative electrode sheet includes a negative electrode current collector and a negative electrode film layer disposed on at least one surface of the negative electrode current collector, where the negative electrode film layer includes a negative electrode active material.

In an example, the negative electrode current collector has two opposite surfaces in its thickness direction, and the negative electrode film layer is disposed on either or both of the two opposite surfaces of the negative electrode current collector.

In some embodiments, a metal foil or a composite current collector may be used as the negative electrode current collector. For example, copper foil may be used as the metal foil. The composite current collector may include a polymer material substrate and a metal layer formed on at least one surface of the polymer material substrate. The composite current collector can be formed by forming a metal material (copper, copper alloy, nickel, nickel alloy, titanium, titanium alloy, silver, silver alloy, and the like) on a polymer material substrate (such as a substrate of polypropylene (PP), polyethylene terephthalate (PET), polybutylene terephthalate (PBT), polystyrene (PS), and polyethylene (PE)).

In some embodiments, well-known negative electrode active materials for batteries in the art may be used as the negative electrode active material. In an example, the negative electrode active material may include at least one of the following materials: artificial graphite, natural graphite, soft carbon, hard carbon, silicon-based material, tin-based material, lithium titanate, and the like. The silicon-based material may be at least one selected from elemental silicon, silicon oxide compound, silicon-carbon composite, silicon-nitrogen composite, and silicon alloy. The tin-based material may be at least one selected from elemental tin, tin oxide compound, and tin alloy. However, the present application is not limited to these materials, and other conventional materials that can be used as negative electrode active materials for batteries may also be used. These negative electrode active materials may be used alone, or two or more of them may be used in combination.

In some embodiments, the negative electrode film layer further optionally includes a binder. In an example, the binder may be at least one selected from styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. In an example, the conductive agent may be at least one selected from superconducting carbon, acetylene black, carbon black, Ketjen black, carbon dots, carbon nanotubes, graphene, and carbon nanofiber.

In some embodiments, the negative electrode film layer further optionally includes other auxiliaries, for example, a thickener (such as sodium carboxymethyl cellulose (CMC-Na)).

In some embodiments, the negative electrode sheet can be prepared by the following method: the above components for preparing the negative electrode sheet, such as the negative electrode active material, the conductive agent, the binder, and any other components, are dispersed in a solvent (such as deionized water), to form a negative electrode slurry; and the negative electrode current collector is coated with the negative electrode slurry, followed by processes such as drying and cold pressing, to obtain the negative electrode sheet.

[Electrolyte]

The electrolyte plays a role in conducting ions between the positive electrode sheet and the negative electrode sheet. A type of electrolyte is not specifically limited by the present application, and may be selected according to needs. For example, the electrolyte may be liquid, gel, or all-solid.

In some embodiments, the electrolyte is liquid and includes an electrolytic salt and a solvent.

In some embodiments, the electrolytic salt may be at least one selected from sodium hexafluorophosphate, sodium tetrafluoroborate, sodium perchlorate, sodium hexafluoroarsenate, sodium bis(fluorosulfonyl)imide, sodium bis(trifluoromethanesulfonyl)imide, sodium trifluoromethanesulfonate, sodium difluorophosphate, sodium difluorooxalate borate, sodium dioxalate borate, sodium difluorodioxalate phosphate, and sodium tetrafluorooxalate phosphate.

In some embodiments, the solvent may be at least one selected from ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte further optionally includes an additive. In an example, the additive may include a negative electrode film-forming additive, and a positive electrode film-forming additive, and may further include additives that can improve certain performance of the battery, such as additives that improve overcharge performance of batteries and additives that improve high or low temperature performance of batteries.

[Separator]

In some embodiments, the secondary battery further includes a separator. The separator is disposed between the positive electrode sheet and the negative electrode sheet, mainly playing a role in preventing short circuit between the positive and negative electrodes, as well as allowing active ions to pass through. A type of separator is not particularly limited in the present application, and any well-known porous structure separator with good chemical stability and mechanical stability may be selected.

In some embodiments, a material of the separator may be at least one selected from glass fiber, non-woven fabric, polyethylene, polypropylene, and polyvinylidene fluoride. The separator may be a single-layer film or a multi-layer composite film, without particular limitation. When the separator is a multi-layer composite film, materials of the layers may be the same or different, without particular limitation.

In some embodiments, the positive electrode sheet, negative electrode sheet, and separator may be made into an electrode assembly through a winding process or a stacking process.

In some embodiments, the secondary battery includes a secondary battery cell, or includes a battery module and a battery pack.

In some embodiments, the secondary battery may include an outer package. The outer package may be used to encapsulate the above electrode assembly and electrolyte.

In some embodiments, the outer package of the secondary battery may be a hard shell, such as a hard plastic shell, an aluminum shell, or a steel shell. The outer package of the secondary battery may alternatively be a soft package, such as a pouch soft package. The soft package may be made of plastic, and examples of the plastic include polypropylene, polybutylene terephthalate, polybutylene succinate, and the like.

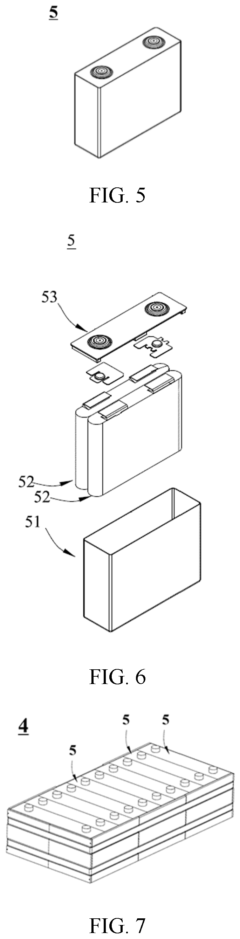

A shape of the secondary battery cell is not particularly limited in the present application, which may be cylindrical, prismatic, or any other shape. For example, FIG. 5 shows a secondary battery cell 5 of a prismatic structure as an example.

In some embodiments, referring to FIG. 6, the outer package may include a shell 51 and a cover plate 53. The shell 51 may include a bottom plate and a side plate connected to the bottom plate, and the bottom plate and the side plate enclose an accommodating cavity. The shell 51 has an opening in communication with the accommodating cavity, and the cover plate 53 can cover the opening to close the accommodating cavity. The positive electrode sheet, negative electrode sheet, and separator can form an electrode assembly 52 through a winding process or a stacking process. The electrode assembly 52 is encapsulated in the accommodating cavity. The electrolyte infiltrates into the electrode assembly 52. There may be one or more electrode assemblies 52 in the secondary battery cell 5, which may be selected by those skilled in the art according to specific actual needs.

In some embodiments, the secondary battery cells may be assembled into a battery module, there may be one or more secondary battery cells in the battery module, and a specific number may be selected by those skilled in the art according to the application and capacity of the battery module.

FIG. 7 shows a battery module 4 as an example. Referring to FIG. 7, in the battery module 4, multiple secondary battery cells 5 may be arranged sequentially along a length direction of the battery module 4, and certainly may alternatively be arranged in any other manner. Further, the multiple secondary battery cells 5 may be fixed by fasteners.

Optionally, the battery module 4 may further include a housing having an accommodating space, and the multiple secondary battery cells 5 are accommodated in the accommodating space.

In some embodiments, the above battery module may also be assembled into a battery pack, there may be one or more battery modules in the battery pack and a specific number may be selected by those skilled in the art according to the application and capacity of the battery pack.

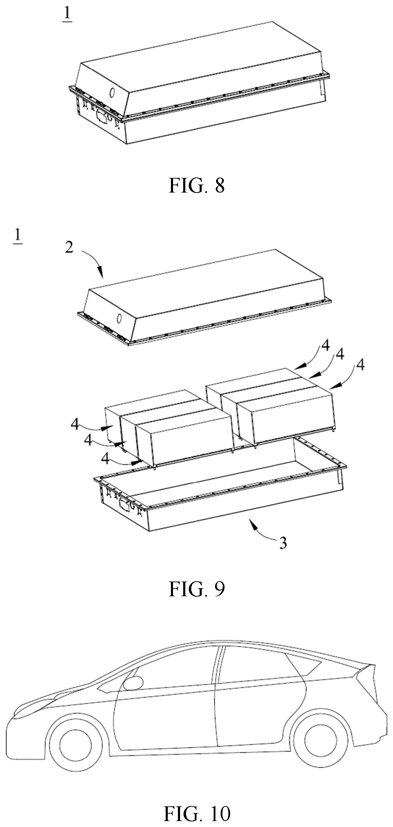

FIG. 8 and FIG. 9 show a battery pack 1 as an example. Referring to FIG. 8 and FIG. 9, the battery pack 1 may include a battery box and multiple battery modules 4 disposed in the battery box. The battery box includes an upper box body 2 and a lower box body 3, where the upper box body 2 can cover the lower box body 3 to form a closed space for accommodating the battery modules 4. The multiple battery modules 4 may be arranged in the battery box in any manner.

In addition, the present application further provides an electric apparatus. The electric apparatus includes the secondary battery provided in the present application. The secondary battery may be used as a power source of the electric apparatus or as an energy storage unit of the electric apparatus. The electric apparatus may include mobile devices (such as mobile phones and notebook computers), electric vehicles (such as battery electric vehicles, hybrid electric vehicles, plug-in hybrid electric vehicles, electric bicycles, electric scooters, electric golf carts, and electric trucks), electric trains, ships, satellites, energy storage systems, and the like, but is not limited thereto.

For the electric apparatus, a secondary battery cell, a battery module, or a battery pack may be selected according to the use needs of the electric apparatus.

FIG. 10 shows an electric apparatus as an example. The electric apparatus is a battery electric vehicle, a hybrid electric vehicle, a plug-in hybrid electric vehicle, or the like. To meet the high power and high energy density requirements of the electric apparatus on secondary batteries, a battery pack or battery module may be used.

[Examples]

The following provides a description of examples of the present application. The examples described below are exemplary and are only used to explain the present application, and cannot be understood as limiting the present application. Specific techniques or conditions that are not indicated in the examples are carried out according to the techniques or conditions described in the literature in the art or according to the product instructions. Reagents or instruments used without indicating the manufacturer are all conventional products that are commercially available.

**Example 1**

The first positive electrode active material precursor was prepared by co-precipitation reaction.

A mixed sulfate aqueous solution with a concentration of 2 mol/L was prepared according to a molar ratio the of Ni, Fe, Cu, and Mn elements in the first positive electrode active material set in Table 1; a sodium hydroxide aqueous solution with a concentration of 4 mol/L and an ammonia solution with a concentration of 2 mol/L (the ammonia solution served as a first complexing agent) were also prepared; pure water accounting for 30% by volume was added to a reaction kettle; the mixed sulfate aqueous solution and the first complexing agent were pumped into the reaction kettle at the same flow rate; the flow rate of the mixed sulfate aqueous solution and the first complexing agent was kept constant, a stirring speed was set to 1000 r/min, and a reaction was carried out at a constant temperature, where the temperature range was 60°C; during the reaction, a precipitant was added to adjust the pH in the reaction kettle, and the pH was kept constant at about 11; a precursor slurry was obtained through synthesis by continuous reaction; and then the precursor slurry was centrifuged, washed, filtered, and dried to obtain a first positive electrode active material precursor product.

The first positive electrode active material precursor and sodium carbonate were mixed, where a ratio of a molar amount of the Na element to a total molar amount of metal elements in the first positive electrode active material precursor was 0.93; the mixture was calcinated after being uniformly mixed with a high-speed mixer, where primary calcination was performed at a temperature of 800°C for 5 h, and secondary calcination was performed at a temperature of 950°C for 15 h in an air atmosphere; and then a first positive electrode active material substrate was obtained.

The second positive electrode active material precursor was prepared by co-precipitation reaction:
A mixed sulfate aqueous solution with a concentration of 2 mol/L was prepared according to a molar ratio of the Ni, Fe, Mn, and Ti elements in the second positive electrode active material set in Table 1; a sodium hydroxide aqueous solution with a concentration of 4 mol/L and an aqueous ammonia solution with a concentration of 1 mol/L (the aqueous ammonia solution served as a second complexing agent) were prepared; pure water accounting for 30% by volume was added to a reaction kettle; the mixed sulfate aqueous solution and the second complexing agent were pumped into the reaction kettle at the same flow rate; the flow rate of the mixed sulfate aqueous solution and the second complexing agent was kept constant, a stirring speed was set to 1000 r/min, and a reaction was carried out at a constant temperature, where the temperature range was 60°C; during the reaction, a precipitant was added to adjust the pH in the reaction kettle, and the pH was kept constant at about 13 during the reaction; a precursor slurry was obtained through synthesis by continuous reaction; and then the precursor slurry was centrifuged, washed, filtered, and dried to obtain a second positive electrode active material precursor product.

The second positive electrode active material precursor and sodium carbonate were mixed, where a ratio of a molar amount of the Na element to a total molar amount of metal elements in the first positive electrode active material precursor was 0.93; the mixture was calcinated after being uniformly mixed with a high-speed mixer, where primary calcination was performed at a temperature of 950°C for 6 h, and secondary calcination was performed at a temperature of 750°C for 12 h in an air atmosphere; and then a second positive electrode active material substrate was obtained.

The first positive electrode active material substrate and the second positive electrode active material substrate were mixed at a specific mass ratio, and then mixed and sintered with $NH_4H_2PO_4$, where a proportion of $NH_4H_2PO_4$ relative to a total mass of the first positive electrode active material substrate and the second positive electrode active material substrate was 10000 ppm; and the mixture was uniformly mixed and then calcinated at a calcination temperature of 300°C for 8 h in an air atmosphere, to ultimately obtain a positive electrode active material with a surface coated with a $Na_4H_2PO_4$ compound, which was referred to as a positive electrode active material composition.

Examples 2 to 7

The preparation of the first positive electrode active material substrate and the second positive electrode active material substrate was the same as that in Example 1.

The mass ratio of the first positive electrode active material substrate and the second positive electrode active material substrate was adjusted, and the coating layer was provided according to the method of Example 1 to obtain the positive electrode active material of each example.

Example 8

On the basis of Example 1, the pH value for co-precipitation during the preparation of the first positive electrode active material substrate was adjusted to 11.5, and the concentration of the first complexing agent in the materials in the reaction kettle was adjusted to 1 mol/L, to obtain a first positive electrode active material substrate with $D_v50$ of 6 $\mu$m.

Example 9

On the basis of Example 1, the pH value for co-precipitation during the preparation of the first positive electrode active material substrate was adjusted to 10, and the concentration of the first complexing agent used was adjusted to 1 mol/L, to obtain a first positive electrode active material substrate with $D_v50$ of 15 $\mu$m.

Example 10

On the basis of Example 1, the pH value for co-precipitation during the preparation of the first positive electrode active material substrate was adjusted to 10.8, and the concentration of the first complexing agent used was adjusted to 1.5 mol/L, to obtain a first positive electrode active material substrate with $D_v50$ of 8 $\mu$m.

Example 11

On the basis of Example 1, the pH value for co-precipitation during the preparation of the first positive electrode active material substrate was adjusted to 10.5, and the concentration of the first complexing agent used was adjusted to 1.5 mol/L, to obtain a first positive electrode active material substrate with $D_v50$ of 12 $\mu$m.

Example 12

On the basis of Example 1, the pH value for co-precipitation during the preparation of the first positive electrode active material substrate was adjusted to 12, and the concentration of the first complexing agent used was adjusted to 2 mol/L, to obtain a first positive electrode active material substrate with $D_v50$ of 4 $\mu$m.

Example 13

On the basis of Example 1, the pH value for co-precipitation during the preparation of the first positive electrode active material substrate was adjusted to 9, and the concentration of the first complexing agent used was adjusted to 1 mol/L, to obtain a first positive electrode active material substrate with $D_v50$ of 18 $\mu$m.

Example 14

On the basis of Example 1, the pH value for co-precipitation during the preparation of the second positive electrode active material substrate was adjusted to 13, and the concentration of the second complexing agent used was adjusted to 0.5 mol/L, to obtain a second positive electrode active material substrate with $D_v50$ of 2 $\mu$m.

Example 15

On the basis of Example 1, the pH value for co-precipitation during the preparation of the second positive electrode active material substrate was adjusted to 12, and the concentration of the second complexing agent used was adjusted to 0.5 mol/L, to obtain a second positive electrode active material substrate with $D_v50$ of 5.5 $\mu$m.

Example 16

On the basis of Example 1, the pH value for co-precipitation during the preparation of the second positive electrode active material substrate was adjusted to 14, and the concentration of the second complexing agent used was adjusted to 1 mol/L, to obtain a second positive electrode active material substrate with $D_v50$ of 1 $\mu$m.

Example 17

On the basis of Example 1, the pH value for co-precipitation during the preparation of the second positive electrode active material substrate was adjusted to 11, and the concentration of the second complexing agent used was adjusted to 1 mol/L, to obtain a second positive electrode active material substrate with $D_v50$ of 7 $\mu$m.

Examples 18 and 19

On the basis of Example 1, the amounts of copper sulfate and nickel sulfate used in the preparation of the first positive electrode active material substrate were adjusted to obtain first positive electrode active material substrates $Na_{0.93}Ni_{0.31}Fe_{0.33}Mn_{0.34}Cu_{0.02}O_2$ and $Na_{0.93}Ni_{0.1}Fe_{0.34}Mn_{0.33}Cu_{0.2}O_2$ respectively.

Examples 20 to 24

On the basis of Example 1, during the preparation of the second positive electrode active material substrate, titanium sulfate was replaced with magnesium sulfate, zirconium sulfate, aluminum sulfate, calcium sulfate, and zinc sulfate respectively to obtain the corresponding second positive electrode active material substrates, specifically as shown in Table 2.

Example 25

On the basis of Example 24, the coating layer was removed.

Example 26

Referring to the process of Example 24, for the first positive electrode active material substrate, the primary calcination was performed at a temperature of 700°C for 3 h, and the secondary calcination was performed at a temperature of 900°C for 12 h; for the second positive electrode active material substrate, the primary calcination was performed at a temperature of 850°C for 3 h, and the secondary calcination was performed at a temperature of 700°C for 10 h; and the rest was the same as that in Example 24, to obtain the corresponding first positive electrode active material substrate and second positive electrode active material substrate.

Example 27

Referring to the process of Example 24, for the first positive electrode active material substrate, the primary calcination was performed at a temperature of 900°C for 10 h, and the secondary calcination was performed at a temperature of 1000°C for 18 h; for the second positive electrode active material substrate, the primary calcination was performed at a temperature of 950°C for 8 h, and the secondary calcination was performed at a temperature of 900°C for 18 h; and the rest was the same as that in Example 24, to obtain the corresponding first positive electrode active material substrate and second positive electrode active material substrate.

Example 28

On the basis of Example 1, during the preparation of the second positive electrode active material substrate, no titanium sulfate was added, and the rest was the same as that in Example 1, to obtain the second positive electrode active material substrate $Na_{0.93}Ni_{0.33}Fe_{0.33}Mn_{0.34}O_2$.

Examples 29 to 33

Referring to the process of Example 1, the amounts of the metal elements were adjusted according to the element compositions in Table 1 and Table 2, and the rest was the same as that in Example 1, to obtain the corresponding first positive electrode active material substrate and second positive electrode active material substrate.

Example 34

Referring to the process of Example 1, for the first positive electrode active material substrate, the primary calcination was performed at a temperature of 700°C for 3 h, and the secondary calcination was performed at a temperature of 900°C for 12 h; for the second positive electrode active material substrate, the primary calcination was performed at a temperature of 850°C for 3 h, and the secondary calcination was performed at a temperature of 700°C for 10 h; and the rest was the same as that in Example 1, to obtain the corresponding first positive electrode active material substrate and second positive electrode active material substrate.

Example 35

Referring to the process of Example 1, for the first positive electrode active material substrate, the primary calcination was performed at a temperature of 900°C for 10 h, and the secondary calcination was performed at a temperature of 1000°C for 18 h; for the second positive electrode active material substrate, the primary calcination was performed at a temperature of 950°C for 8 h, and the secondary calcination was performed at a temperature of 900°C for 18 h; and the rest was the same as that in Example 1, to obtain the corresponding first positive electrode active material substrate and second positive electrode active material substrate.

Example 36

Referring to the process of Example 1, for the first positive electrode active material substrate, the primary calcination was performed at a temperature of 780°C for 4 h, and the secondary calcination was performed at a temperature of 920°C for 15 h; for the second positive electrode active material substrate, the primary calcination was performed at a temperature of 900°C for 5 h, and the secondary calcination was performed at a temperature of 720°C for 12 h; and the rest was the same as that in Example 1, to obtain the corresponding first positive electrode active material substrate and second positive electrode active material substrate.

Example 37

Referring to the process of Example 1, for the first positive electrode active material substrate, the primary calcination was performed at a temperature of 820°C for 6 h, and the secondary calcination was performed at a temperature of 970°C for 18 h; for the second positive electrode active material substrate, the primary calcination was performed at a temperature of 950°C for 7 h, and the secondary calcination was performed at a temperature of 800°C for 15 h; and the rest was the same as that in Example 1, to obtain the corresponding first positive electrode active material substrate and second positive electrode active material substrate.

Example 38

Referring to the process of Example 1, for the first positive electrode active material substrate, the primary calcination was performed at a temperature of 900°C for 10 h, and the secondary calcination was performed at a temperature of 1100°C for 20 h; and the rest was the same as that in Example 1, to obtain the corresponding first positive electrode active material substrate.

Example 39

Referring to the process of Example 1, for the second positive electrode active material substrate, the primary calcination was performed at a temperature of 980°C for 10 h, and the secondary calcination was performed at a temperature of 930°C for 18 h; and the rest was the same as that in Example 1, to obtain the corresponding second positive electrode active material substrate.

Example 40

Referring to the process of Example 1, for the first positive electrode active material substrate, the primary calcination was performed at a temperature of 900°C for 10 h, and the secondary calcination was performed at a temperature of 1100°C for 20 h; for the second positive electrode active material substrate, the primary calcination was performed at a temperature of 980°C for 10 h, and the secondary calcination was performed at a temperature of 930°C for 18 h; and the rest was the same as that in Example 1, to obtain the corresponding first positive electrode active material substrate and second positive electrode active material substrate.

Example 41

Referring to the process of Example 1, for the first positive electrode active material substrate, the primary calcination was performed at a temperature of 900°C for 10 h, and the secondary calcination was performed at a temperature of 1100°C for 25 h; and the rest was the same as that in Example 1, to obtain the corresponding first positive electrode active material substrate.

Example 42

Referring to the process of Example 1, for the second positive electrode active material substrate, the primary calcination was performed at a temperature of 1050°C for 8 h, and the secondary calcination was performed at a temperature of 930°C for 18 h; and the rest was the same as that in Example 1, to obtain the corresponding second positive electrode active material substrate.

Examples 43 to 46

The amount of $NH_4H_2PO_4$ used was adjusted to obtain positive electrode active materials with different coating amounts of the $Na_4H_2PO_4$ compound, and the obtained products are shown in Table 1 and Table 2 respectively.

Example 47

No coating treatment was performed, the first positive electrode active material substrate and second positive electrode active material substrate of Example 1 were directly used as the corresponding first positive electrode active material and second positive electrode active material, and the rest was the same as the treatment in Example 1.

Example 48

No coating treatment was performed, the first positive electrode active material substrate and second positive electrode active material substrate of Example 29 were directly used as the corresponding first positive electrode active material and second positive electrode active material, and the rest was the same as the treatment in Example 29.

Example 49

No coating treatment was performed, the first positive electrode active material substrate and second positive electrode active material substrate of Example 30 were directly used as the corresponding first positive electrode active material and second positive electrode active material, and the rest was the same as the treatment in Example 30.

Example 50

No coating treatment was performed, the first positive electrode active material substrate and second positive electrode active material substrate of Example 22 were directly used as the corresponding first positive electrode active material and second positive electrode active material, and the rest was the same as the treatment in Example 22.

Example 51

No coating treatment was performed, the first positive electrode active material substrate and second positive electrode active material substrate of Example 23 were directly used as the corresponding first positive electrode active material and second positive electrode active material, and the rest was the same as the treatment in Example 23.

Example 52

No coating treatment was performed, the first positive electrode active material substrate and second positive electrode active material substrate of Example 34 were directly used as the corresponding first positive electrode active material and second positive electrode active material, and the rest was the same as the treatment in Example 34.

Example 53

No coating treatment was performed, the first positive electrode active material substrate and second positive electrode active material substrate of Example 35 were directly used as the corresponding first positive electrode active material and second positive electrode active material, and the rest was the same as the treatment in Example 35.

Example 54

No coating treatment was performed, the first positive electrode active material substrate and second positive electrode active material substrate of Example 36 were directly used as the corresponding first positive electrode active material and second positive electrode active material, and the rest was the same as the treatment in Example 36.

Example 55

No coating treatment was performed, the first positive electrode active material substrate and second positive electrode active material substrate of Example 37 were directly used as the corresponding first positive electrode active material and second positive electrode active material, and the rest was the same as the treatment in Example 37.

Example 56

Referring to the process of Example 1, for the first positive electrode active material substrate, the primary calcination was performed at a temperature of 700°C for 5 h, and the secondary calcination was performed at a temperature of 750°C for 15 h; and the rest was the same as that in Example 1, to obtain the corresponding polycrystal first positive electrode active material substrate.

Example 57

Referring to the process of Example 1, for the second positive electrode active material substrate, the primary calcination was performed at a temperature of 800°C for 3 h, and the secondary calcination was performed at a temperature of 700°C for 12 h; and the rest was the same as that in Example 1, to obtain the corresponding polycrystal second positive electrode active material substrate.

Example 58

Referring to the process of Example 1, for the first positive electrode active material substrate, the primary calcination was performed at a temperature of 700°C for 5 h, and the secondary calcination was performed at a temperature of 750°C for 15 h; for the second positive electrode active material substrate, the primary calcination was performed at a temperature of 800°C for 3 h, and the secondary calcination was performed at a temperature of 700°C for 12 h; and the rest was the same as that in Example 1, to obtain the corresponding first positive electrode active material substrate and second positive electrode active material substrate.

Tests:

Element composition testing for positive electrode active material: An inductively coupled plasma spectrometer (ICP) was used for measurement. Powder samples of the first positive electrode active material substrate and the second positive electrode active material substrate were respectively dissolved in a sample chamber; a sample solution was evaporated using plasma to form gaseous atoms, followed by excitation to produce light radiation; and a collector was used to acquire a spectral line intensity, to obtain a quantitative content of each element.

The element composition of each positive electrode active material substrate was basically the same as a set proportion of the elements in the raw materials.

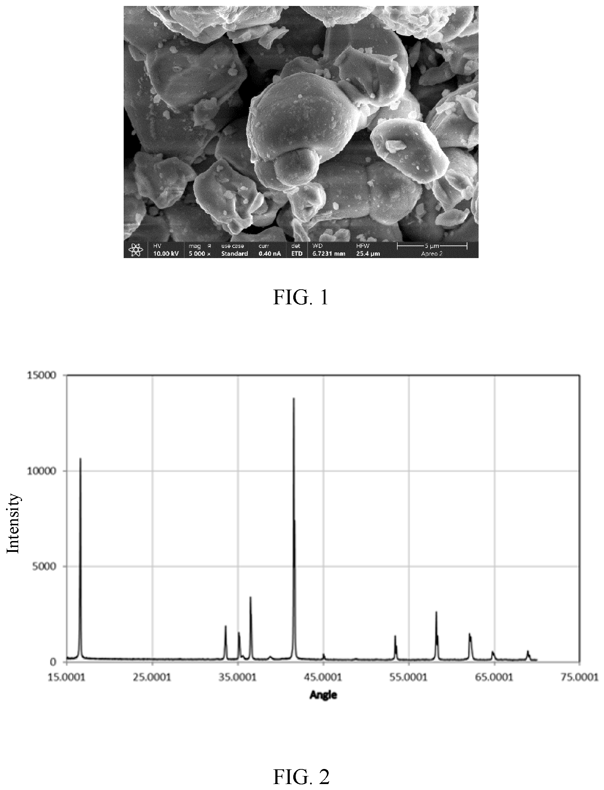

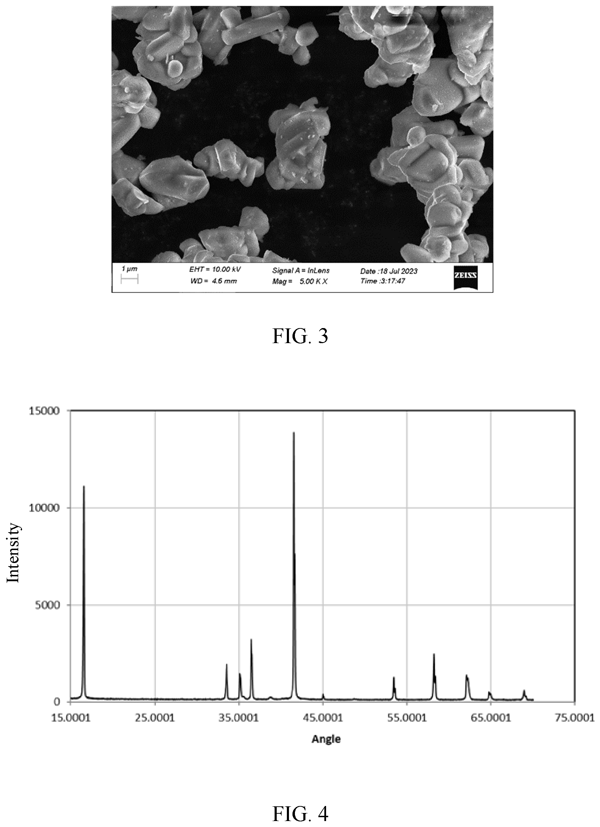

Sample morphology characterization: The surface morphology of the positive electrode active material was characterized using a field emission scanning electron microscope (Sigma300) from ZEISS, Germany. A scanning electron microscope image of the first positive electrode active material substrate in Example 1 was recorded in FIG. 1. A scanning electron microscope image of the second positive electrode active material substrate in Example 1 was recorded in FIG. 3.

Volume-based particle size distribution characterization for samples: A laser particle size analyzer (Malvern Company, model: Mastersizer3000) was used to test the particle size distributions of the first positive electrode active material substrate, the second positive electrode active material substrate, and the formed positive electrode active material composition of each example respectively, to obtain a volume-based particle size distribution diagram of the first positive electrode active material substrate, a volume-based particle size distribution diagram of the second positive electrode active material substrate, and a volume-based particle size distribution diagram of the positive electrode active material composition.

Particle size distribution characterization for positive electrode active material composition: The positive electrode active material composition was observed under a scanning electron microscope at a magnification of 3000 times, and an EDS element mapping test was performed as well. The first positive electrode active material and the second positive electrode active material were marked according to whether there was a content of the Cu element in an EDS result. In the same field of view, 30 first positive electrode active materials and 30 second positive electrode active materials were respectively selected to measure their respective particle sizes, and 5 regions were randomly selected for the above operations, to obtain average particle sizes $D_1'$ and $D_2'$ of the first positive electrode active material and the second positive electrode active material through calculation. Then, peak positions of fitted peaks were set at $D_1'$ and $D_2'$ respectively. The Origin software was used to perform peak fitting on the volume-based particle size distribution diagram of the positive electrode active material composition based on Gaussian function, and the positions of the fitted peaks were kept unchanged during the process, to divide the volume-based particle size distribution diagram of the positive electrode active material composition into a small-particle fitted peak type and a large-particle fitted peak type, where the large-particle fitted peak type basically coincided with the volume-based particle size distribution diagram of the first positive electrode active material, and the small-particle fitted peak type basically coincided with the volume-based particle size distribution diagram of the second positive electrode active material, indicating that the peak fitting result is reliable.

Characteristic element distribution characterization for positive electrode active material composition: The positive electrode active material composition was observed under a scanning electron microscope for observation at a magnification of 3000 times, and an EDS element mapping test was performed as well. The first positive electrode active material and the second positive electrode active material were marked according to whether there was the Cu element in an EDS result. In the same field of view, 30 first positive electrode active materials and 30 second positive electrode active materials were respectively selected to calculate an average mass percentage of the Cu element, and 5 regions were randomly selected for the above operations. An average mass percentage of the Cu element in the small-particle fitted peak with a particle size less than or equal to $D_v10$ was recorded as m1, which was basically 0, and an average mass percentage of the Cu element in the large-particle fitted peak with a particle size greater than or equal to $D_v90$ was recorded as m2, and m2 was basically the same as the percentage of Cu in the respective first positive electrode material, so m1<m2.

XRD test: An XRD spectrum test was performed using an X-ray diffractometer (Bruker D8 Advance). First, powder samples of the first positive electrode active material substrate, the second positive electrode active material substrate, and the formed positive electrode active material composition were placed on a sample table respectively, and each powder sample was compacted with a glass slide, then placed in a sample chamber, and irradiated with X-rays to obtain an XRD spectrum. A corresponding grain size was calculated by the following method: a particle size of a corresponding crystal plane of the material was calculated according to the Scherrer formula. The Scherrer formula is $D=(K\cdot\gamma)/(B\cdot\cos\theta)$, where K is the Scherrer constant, $\gamma$ is a wavelength of the X-rays, B is a full width at half maximum of a diffraction peak, $\theta$ is a Bragg diffraction angle, and D is a thickness in a direction perpendicular to the crystal plane.

The XRD spectrum of the first positive electrode active material substrate in Example 1 was recorded in FIG. 2. The XRD spectrum of the second positive electrode active material substrate in Example 1 was recorded in FIG. 4.

Powder compacted density of samples:

The compacted density of the positive electrode active material under a pressure of 3 T was measured according to GB/T 24533-2019. A top column and an upper gasket were removed, 1 g of sample was weighed and placed into a sleeve, and a weight was recorded as m, with an accuracy of 0.0001 g. Powder compacted density=10m/S×H, where m is a weight of the sample, measured in grams (g); H is a thickness of the sample after compaction, measured in millimeters (mm); and S is a cross-sectional area of the top column, measured in square centimeters ($cm^2$).

Compacted density characterization for sample electrode sheet:

A battery electrode sheet that met the processing requirements was obtained; a punching machine was used for punching, to obtain a positive electrode sheet with a diameter of 14 mm; an electronic balance and a desktop digital thickness gauge were used to measure a mass $m_c$ and a thickness $d_c$ of the positive electrode sheet respectively; the punching machine was used for punching, to obtain a sufficient number of aluminum foil base sheets with a diameter of 14 mm; and the electronic balance and the desktop digital thickness gauge were used to measure a mass mAl and a thickness dAl of the aluminum foil base sheet respectively.

Compacted density of positive electrode sheet $\rho_c=(m_c-mAl)/(\pi(\varphi/2)\times(d_c-dA1))\times10^{\wedge}6$,

where $\rho_c$ is the compacted density of the positive electrode sheet, measured in grams per cubic centimeter ($g/cm^3$);

$m_c$ is the mass of the positive electrode sheet, measured in grams (g);

mAl is the mass of the aluminum foil base sheet, measured in grams (g);

$\varphi$ is the diameter of the positive electrode sheet, measured in millimeters (mm);

$d_c$ is the thickness of the positive electrode sheet, measured in microns ($\mu$m); and

dAl is the thickness of the aluminum foil base sheet, measured in microns ($\mu$m).

Some of the above test results were recorded in Table 1, and some results were recorded in Table 2.

Table 1

| | First positive electrode active material substrate | | | | | Second positive electrode active material substrate | | | | | Positive electrode active material composition | |
|---|---|---|---|---|---|---|---|---|---|---|---|---|
| | Chemical formula | $D_v50$ ($\mu$m) | Crystal phase and morphology | $D_{104}/D_{003}$ | $D_{101}/D_{003}$ | Chemical formula | $D_v50$ ($\mu$m) | Crystal phase and morphology | $D_{104}/D_{003}/$ | $D_{101}/D_{003}$ | Content of coating layer (ppm) | Mass ratio |
| Example 1 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |
| Example 2 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 6:4 |
| Example 3 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 8:2 |
| Example 4 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 5:5 |
| Example 5 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 9:1 |
| Example 6 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 4:6 |
| Example 7 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 1:9 |
| Example 8 | $Na_{0.93}Ni_{0.3}Fe_{0.3}Mn_{0.3}Cu_{0.1}O_2$ | 6 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |

| | First positive electrode active material substrate | | | | | Second positive electrode active material substrate | | | | | Positive electrode active material composition | |
|---|---|---|---|---|---|---|---|---|---|---|---|---|
| | Chemical formula | $D_v50$ (μm) | Crystal phase and morphology | $D_{104}/D_{003}$ | $D_{101}/D_{003}$ | Chemical formula | $D_v50$ (μm) | Crystal phase and morphology | $D_{104}/D_{003}/$ | $D_{101}/D_{003}$ | Content of coating layer (ppm) | Mass ratio |
| Example 9 | $Na_{0.93}Ni_{0.3}Fe_{0.3}Mn_{0.3}Cu_{0.1}O_2$ | 15 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |
| Example 10 | $Na_{0.93}Ni_{0.3}Fe_{0.3}Mn_{0.3}Cu_{0.1}O_2$ | 8 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |
| Example 11 | $Na_{0.93}Ni_{0.3}Fe_{0.3}Mn_{0.3}Cu_{0.1}O_2$ | 12 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |
| Example 12 | $Na_{0.93}Ni_{0.3}Fe_{0.3}Mn_{0.3}Cu_{0.1}O_2$ | 4 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |
| Example 13 | $Na_{0.93}Ni_{0.3}Fe_{0.3}Mn_{0.3}Cu_{0.1}O_2$ | 18 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |
| Example 14 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 2 | O3, quasi-spherical single crystal | 1.6 | 1.11 | 10000 | 7:3 |
| Example 15 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 5.5 | O3, quasi-spherical single crystal | 1.6 | 1.11 | 10000 | 7:3 |
| Example 16 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 1.0 | O3, quasi-spherical single crystal | 1.6 | 1.11 | 10000 | 7:3 |

| | First positive electrode active material substrate | | | | | Second positive electrode active material substrate | | | | | Positive electrode active material composition | |
|---|---|---|---|---|---|---|---|---|---|---|---|---|
| | Chemical formula | $D_v50$ ($\mu$m) | Crystal phase and morphology | $D_{104}/D_{003}$ | $D_{101}/D_{003}$ | Chemical formula | $D_v50$ ($\mu$m) | Crystal phase and morphology | $D_{104}/D_{003}/$ | $D_{101}/D_{003}$ | Content of coating layer (ppm) | Mass ratio |
| Example 17 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 7 | O3, quasi-spherical single crystal | 1.6 | 1.11 | 10000 | 7:3 |
| Example 18 | $Na_{0.93}Ni_{0.31}Fe_{0.33}Mn_{0.34}Cu_{0.02}O_2$ | 10 | O3, quasi-spherical single crystal | 1.60 | 1.08 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |
| Example 19 | $Na_{0.93}Ni_{0.15}Fe_{0.33}Mn_{0.34}Cu_{0.18}O_2$ | 10 | O3, quasi-spherical single crystal | 1.63 | 1.14 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |
| Example 20 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Mg_{0.01}O_2$ | 3.5 | O3, quasi-spherical single crystal | 1.61 | 1.12 | 10000 | 7:3 |
| Example 21 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Zr_{0.01}O_2$ | 3.5 | O3, quasi-spherical single crystal | 1.6 | 1.10 | 10000 | 7:3 |
| Example 22 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Al_{0.01}O_2$ | 3.5 | O3, quasi-spherical single crystal | 1.6 | 1.111 | 10000 | 7:3 |
| Example 23 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ca_{0.01}O_2$ | 3.5 | O3, quasi-spherical single crystal | 1.6 | 1.11 | 10000 | 7:3 |
| Example 24 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Zn_{0.01}O_2$ | 3.5 | O3, quasi-spherical single crystal | 1.6 | 1.11 | 10000 | 7:3 |

| | First positive electrode active material substrate | | | | | Second positive electrode active material substrate | | | | | Positive electrode active material composition | |
|---|---|---|---|---|---|---|---|---|---|---|---|---|
| | Chemical formula | $D_v50$ ($\mu$m) | Crystal phase and morphology | $D_{104}/D_{003}$ | $D_{101}/D_{003}$ | Chemical formula | $D_v50$ ($\mu$m) | Crystal phase and morphology | $D_{104}/D_{003}/$ | $D_{101}/D_{003}$ | Content of coating layer (ppm) | Mass ratio |
| Example 25 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Zn_{0.01}O_2$ | 3.5 | O3, quasi-spherical single crystal | 1.6 | 1.11 | None | 7:3 |
| Example 26 | $Na_{0.93}Ni_{0.3}Fe_{0.3}Mn_{0.3}Cu_{0.1}O_2$ | 10 | O3, quasi-spherical single crystal | 1.5 | 0.9 | $Na_{0.93}Ni_{0.32}Fe_{0.33}Mn_{0.34}Zn_{0.01}O_2$ | 3.5 | O3, quasi-spherical single crystal | 1.5 | 1.2 | 10000 | 7:3 |
| Example 27 | $Na_{0.93}Ni_{0.3}Fe_{0.3}Mn_{0.3}Cu_{0.1}O_2$ | 10 | O3, quasi-spherical single crystal | 1.7 | 1.2 | $Na_{0.93}Ni_{0.32}Fe_{0.33}Mn_{0.34}Zn_{0.01}O_2$ | 3.5 | O3, quasi-spherical single crystal | 1.7 | 0.9 | 10000 | 7:3 |
| Example 28 | $Na_{0.93}Ni_{0.3}Fe_{0.3}Mm_{0.3}Cu_{0.1}O_2$ | 10 | O3, quasi-spherical single crystal | 1.61 | 1.1 | $Na_{0.93}Ni_{0.33}Fe_{0.33}Mn_{0.34}O_2$ | 3.5 | O3, quasi-spherical single crystal | 1.6 | . 1.11 | 10000 | 7:3 |
| Example 29 | $Na_{0.8}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |
| Example 30 | $Na_{0.93}Ni_{0.44}Fe_{0.01}Mn_{0.45}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |
| Example 31 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.8}Ni_{0.32}Fe_{0.33}Mn_{0.34}Ti_{0.01}O_2$ | 3.5 | O3, quasi-spherical single crystal | 1.6 | 1.11 | 10000 | 7:3 |
| Example 32 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.48}Fe_{0.01}Mn_{0.5}Ti_{0.01}O_2$ | 3.5 | O3, quasi-spherical single crystal | 1.6 | 1.11 | 10000 | 7:3 |

EP 4 779 715 A1

| | First positive electrode active material substrate | | | | | Second positive electrode active material substrate | | | | | Positive electrode active material composition | |
|---|---|---|---|---|---|---|---|---|---|---|---|---|
| | Chemical formula | $D_v50$ ($\mu$m) | Crystal phase and morphology | $D_{104}/D_{003}$ | $D_{101}/D_{003}$ | Chemical formula | $D_v50$ ($\mu$m) | Crystal phase and morphology | $D_{104}/D_{003}/$ | $D_{101}/D_{003}$ | Content of coating layer (ppm) | Mass ratio |
| Example 33 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.3}Fe_{0.3}Mn_{0.33}Ti_{0.07}O_2$ | 3.5 | O3, quasi-spherical single crystal | 1.6 | 1.11 | 10000 | 7:3 |
| Example 34 | $Na_{0.93}Ni_{0.3}Fe_{0.3}Mn_{0.3}Cu_{0.1}O_2$ | 10 | O3, quasi-spherical single crystal | 1.5 | 0.9 | $Na_{0.93}Ni_{0.32}Fe_{0.33}Mn_{0.34}Ti_{0.01}O_2$ | 3.5 | O3, quasi-spherical single crystal | 1.5 | 1.2 | 10000 | 7:3 |
| Example 35 | $Na_{0.93}Ni_{0.3}Fe_{0.3}Mn_{0.3}Cu_{0.1}O_2$ | 10 | O3, quasi-spherical single crystal | 1.7 | 1.2 | $Na_{0.93}Ni_{0.32}Fe_{0.33}Mn_{0.34}Ti_{0.01}O_2$ | 3.5 | O3, quasi-spherical single crystal | 1.7 | 0.9 | 10000 | 7:3 |
| Example 36 | $Na_{0.93}Ni_{0.3}Fe_{0.3}Mn_{0.3}Cu_{0.1}O_2$ | 10 | O3, quasi-spherical single crystal | 1.55 | *1.05* | $Na_{0.93}Ni_{0.32}Fe_{0.33}Mn_{0.34}Ti_{0.01j}O_2$ | 3.5 | O3, quasi-spherical single crystal | 1.55 | 1.15 | 10000 | 7:3 |
| Example 37 | $Na_{0.93}Ni_{0.3}Fe_{0.3}Mn_{0.3}Cu_{0.1}O_2$ | 10 | O3, quasi-spherical single crystal | 1.65 | 1.15 | $Na_{0.93}Ni_{0.32}Fe_{0.33}Mn_{0.34}Ti_{0.01}O_2$ | 3.5 | O3, quasi-spherical single crystal | 1.65 | 1.05 | 10000 | 7:3 |
| Example 38 | $Na_{0.93}Ni_{0.3}Fe_{0.3}Mn_{0.3}Cu_{0.1}O_2$ | 10 | O3, flake single crystal | 1.8 | 1.4 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |
| Example 39 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, flake single crystal | 1.9 | 1.5 | 10000 | 7:3 |
| Example 40 | $Na_{0.93}Ni_{0.3}Fe_{0.3}Mn_{0.3}Cu_{0.1}O_2$ | 10 | O3, flake single crystal | 1.8 | 1.4 | $Na_{0.93}Ni_{0.32}Fe_{0.33}Mn_{0.34}Ti_{0.01}O_2$ | 3.5 | O3, flake single crystal | 1.9 | 1.5 | 10000 | 7:3 |
| Example 41 | $Na_{0.93}Ni_{0.3}Fe_{0.3}Mn_{0.3}Cu_{0.1}O_2$ | 10 | O3, quasi-spherical single crystal | 1.75 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | 7:3 |

| | First positive electrode active material substrate | | | | | Second positive electrode active material substrate | | | | | Positive electrode active material composition | |
|---|---|---|---|---|---|---|---|---|---|---|---|---|
| | Chemical formula | $D_v50$ (μm) | Crystal phase and morphology | $D_{104}/D_{003}$ | $D_{101}/D_{003}$ | Chemical formula | $D_v50$ (μm) | Crystal phase and morphology | $D_{104}/D_{003}/$ | $D_{101}/D_{003}$ | Content of coating layer (ppm) | Mass ratio |
| Example 42 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.84 | 0.95 | 10000 | 7:3 |
| Example 43 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 5000 | 7:3 |
| Example 44 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 20000 | 7:3 |
| Example 45 | $Na_{0.93}Ni_{.03}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | 1000 | 7:3 |
| Example 46 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.03}O_2$ | 3.5 | O3, quasi-spherical single crystal | 1.6 | 1.11 | 30000 | 7:3 |
| Example 47 | $Na_{0.93}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | None | 7:3 |
| Example 48 | $Na_{0.8}Ni_{0.3}Fe_{0.3}Mn_{0.3}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | None | 7:3 |
| Example 49 | $Na_{0.93}Ni_{0.44}Fe_{0.01}Mn_{0.45}Cu_{0.1}O_2$ | 10 | O3, quasi-spherical single crystal | 1.61 | 1.1 | $Na_{0.93}Ni_{0.32}Fe_{0.33}Mn_{0.34}Ti_{0.01}O_2$ | 3.5 | O3, quasi-spherical single crystal | 1.6 | 1.11 | None | 7:3 |

(continued)

| | First positive electrode active material substrate | | | | | | Second positive electrode active material substrate | | | | | | Positive electrode active material composition | |
|---|---|---|---|---|---|---|---|---|---|---|---|---|---|---|
| | Chemical formula | $D_v50$ ($\mu$m) | Crystal phase and morphology | $D_{104}/D_{003}$ | $D_{101}/D_{003}$ | | Chemical formula | $D_v50$ ($\mu$m) | Crystal phase and morphology | $D_{104}/D_{003}/$ | $D_{101}/D_{003}$ | | Content of coating layer (ppm) | Mass ratio |
| Example 50 | $Na_{0.93}Ni_{0.3}Fe_{0.3}Mn_{0.3}Cu_{0.1}O_2$ | 10 | O3, quasi-spherical single crystal | 1.61 | 1.1 | | $Na_{0.93}Ni_{0.32}Fe_{0.33}Mn_{0.34}Al_{0.01}O_2$ | 3.5 | O3, quasi-spherical single crystal | 1.6 | 1.11 | | None | 7:3 |
| Example 51 | $Na_{0.93}Ni_{0.3}Fe_{0.3}Mn_{0.3}Cu_{0.1}O_2$ | 10 | O3, quasi-spherical single crystal | 1.61 | 1.1 | | $Na_{0.93}Ni_{0.32}Fe_{0.33}Mn_{0.34}Ca_{0.01}O_2$ | 3.5 | O3, quasi-spherical single crystal | 1.6 | 1.11 | | None | 7:3 |
| Example 52 | $Na_{0.93}Ni_{0.3}Fe_{0.3}Mn_{0.3}Cu_{0.1}O_2$ | 10 | O3, quasi-spherical single crystal | 1.5 | 0.9 | | $Na_{0.93}Ni_{0.32}Fe_{0.33}Mn_{0.34}Ti_{0.01}O_2$ | 3.5 | O3, quasi-spherical single crystal | 1.5 | 1.2 | | None | 7:3 |
| Example 53 | $Na_{0.93}Ni_{0.3}Fe_{0.3}Mn_{0.3}Cu_{0.1}O_2$ | 10 | O3, quasi-spherical single crystal | 1.7 | 1.2 | | $Na_{0.93}Ni_{0.32}Fe_{0.33}Mn_{0.34}Ti_{0.01}O_2$ | 3.5 | O3, quasi-spherical single crystal | 1.7 | 0.9 | | None | 7:3 |
| Example 54 | $Na_{0.93}Ni_{0.3}Fe_{0.3}Mn_{0.3}Cu_{0.1}O_2$ | 10 | O3, quasi-spherical single crystal | 1.55 | 1.05 | | $Na_{0.93}Ni_{0.32}Fe_{0.33}Mn_{0.34}Ti_{0.01}O_2$ | 3.5 | O3, quasi-spherical single crystal | 1.55 | 1.15 | | None | 7:3 |
| Example 55 | $Na_{0.93}Ni_{0.3}Fe_{0.3}Mn_{0.3}Cu_{0.1}O_2$ | 10 | O3, quasi-spherical single crystal | 1.65 | 1.15 | | $Na_{0.93}Ni_{0.32}Fe_{0.33}Mn_{0.34}Ti_{0.01}O_2$ | 3.5 | O3, quasi-spherical single crystal | 1.65 | 1.05 | | None | 7:3 |
| Example 56 | $Na_{0.93}Ni_{0.3}Fe_{0.3}Mn_{0.3}Cu_{0.1}O_2$ | 10 | O3, polycrystalline | 1.61 | 1.1 | | $Na_{0.93}Ni_{0.32}Fe_{0.33}Mn_{0.34}Ti_{0.01}O_2$ | 3.5 | O3, quasi-spherical single crystal | 1.6 | 1.11 | | 10000 | 7:3 |
| Example 57 | $Na_{0.93}Ni_{0.3}Fe_{0.3}Mn_{0.3}Cu_{0.1}O_2$ | 10 | O3, quasi-spherical single crystal | 1.61 | 1.1 | | $Na_{0.93}Ni_{0.32}Fe_{0.33}Mn_{0.34}Ti_{0.01}O_2$ | 3.5 | O3, polycrystalline | 1.6 | 1.11 | | 10000 | 7:3 |
| Example 58 | $Na_{0.93}Ni_{0.3}Fe_{0.3}Mn_{0.3}Cu_{0.1}O_2$ | 10 | O3, polycrystalline | 1.61 | 1.1 | | $Na_{0.93}Ni_{0.32}Fe_{0.33}Mn_{0.34}Ti_{0.01}O_2$ | 3.5 | O3, polycrystalline | 1.6 | 1.11 | | 10000 | 7:3 |

| | First positive electrode active material substrate | | | | | Second positive electrode active material substrate | | | | | Positive electrode active material composition | |
|---|---|---|---|---|---|---|---|---|---|---|---|---|
| | Chemical formula | $D_v50$ (μm) | Crystal phase and morphology | $D_{104}/D_{003}$ | $D_{101}/D_{003}$ | Chemical formula | $D_v50$ (μm) | Crystal phase and morphology | $D_{104}/D_{003}/$ | $D_{101}/D_{003}$ | Content of coating layer (ppm) | Mass ratio |
| Comparative Example 1 | $Na_{0.93}Ni_{0.3}Fe_{0.3}Mn_{0.3}Cu_{0.1}O_2$ | 10 | O3, quasi-spherical single crystal | 1.61 | 1.1 | / | / | / | / | / | / | / |
| Comparative Example 2 | / | / | / | / | / | $Na_{0.93}Ni_{0.32}Fe_{0.33}Mn_{0.34}Ti_{0.01}O_2$ | 3.5 | O3, quasi-spherical single crystal | 1.6 | 1.11 | 10000 | / |

EP 4 779 715 A1

The content of the coating layer means that the first positive electrode active material and the second positive electrode active material have the same content of the coating layer. The mass ratio is a mass ratio of the first positive electrode active material substrate and the second positive electrode active material substrate.

Performance test:

Preparation of button battery:

A positive electrode active material, PVDF, and conductive carbon at a ratio of 90:5:5 were added to a specific amount of NMP, and stirred in a drying chamber to form a slurry; an aluminum foil was coated with the slurry, followed by drying and cold pressing to form a positive electrode sheet; and then the positive electrode sheet, a sodium sheet serving as a negative electrode, and 1 mol/L NaPF$_6$/(EC+DEC+DMC, at a volume ratio of 1:1:1) serving as an electrolyte were assembled into a button battery in a button battery box.

Test method for initial gram capacity of button battery:

Under 1.5 V to 4.0 V, the button battery was charged at 0.1C to 4.0 V, then charged at a constant voltage of 4.0 V until the current was less than or equal to 0.05 mA, left standing for 2 min, and then discharged at 0.1C to 1.5 V. A discharge capacity at that moment was the initial gram capacity.

Preparation of full battery:

The positive electrode active material composition of each of the examples and comparative examples was used as a positive electrode active material, which was fully stirred and uniformly mixed with a conductive agent acetylene black and a binder polyvinylidene fluoride (PVDF) at a weight ratio of 95:3:2 in an N-methylpyrrolidone solvent system; and then an aluminum foil was coated with the resulting mixture, followed by drying and cold pressing to obtain a positive electrode sheet. A negative electrode active material hard carbon, a conductive agent acetylene black, a binder styrene-butadiene rubber (SBR), and a thickener sodium carboxymethyl cellulose (CMC) were fully stirred and uniformly mixed at a weight ratio of 95:2:2:1 in a deionized water solvent system; and then a copper foil was coated with the resulting mixture, followed by drying and cold pressing to obtain a negative electrode sheet. A PE porous polymer film was used as a separator. The positive electrode sheet, separator, and negative electrode sheet were stacked in order, with the separator located between the positive and negative electrodes for separation, and wound to obtain a bare cell. The bare cell was placed in an outer package, and the prepared base electrolyte (1 mol/L NaPF$_6$/(EC+DEC+DMC, at a volume ratio of 1:1:1)) was injected, followed by sealing to obtain a full battery.

Full battery cycling performance test at 25°C/45°C:

In a constant-temperature environment of 25°C or 45°C, under 1.5 V to 4.0 V, the full battery was charged at 1C to 4.0 V, then charged at a constant voltage of 4.0 V until the current was less than or equal to 0.05 mA, left standing for 5 min, and then discharged at 1C to 1.5 V A capacity was recorded as Dn (n=0, 1, 2...). The foregoing processes were repeated until the capacity faded to 80%.

The test results were recorded in Table 2.

**Table 2**

| | Mass percentage of Cu (%) | D$_v$10 (μm) | D$_v$50 (μm) | D$_v$90 (μm) | e1'/e2' | Powder compacted density (g/cm$^3$) | Initial gram capacity (mAh/g) | Cycling at 25°C (%) | Cycling at 45°C (%) |
|---|---|---|---|---|---|---|---|---|---|
| Example 1 | 4.1 | 1.5 | 9.5 | 18.5 | 23.33 | 3.34 | 130.2 | 93.10 | 91.20 |
| Example 2 | 3.5 | 1.2 | 9 | 18 | 15 | 3.31 | 129.4 | 92.50 | 91.10 |
| Example 3 | 4.7 | 1.8 | 10.5 | 19 | 40 | 3.3 | 129.3 | 92.60 | 91.20 |
| Example 4 | 2.9 | 1 | 8.8 | 17.6 | 10 | 3.21 | 128.7 | 91.80 | 90.20 |
| Example 5 | 5.3 | 2 | 10.8 | 19.5 | 90 | 3.14 | 126.9 | 91.50 | 90.10 |
| Example 6 | 2.3 | 0.8 | 8 | 15 | 6.67 | 3.06 | 127.5 | 91.30 | 89.60 |
| Example 7 | 0.6 | 0.7 | 7.6 | 14.5 | 1.1 | 3.05 | 128.8 | 91.10 | 89.40 |
| Example 8 | 4.1 | 0.5 | 7 | 14 | 23.33 | 3.03 | 129.1 | 90.80 | 89.10 |
| Example 9 | 4.1 | 2 | 11 | 20 | 23.33 | 3.01 | 128.4 | 90.70 | 89.0 |

(continued)

| | Mass percentage of Cu (%) | $D_v 10$ (μm) | $D_v 50$ (μm) | $D_v 90$ (μm) | e1'/e2' | Powder compacted density (g/cm$^3$) | Initial gram capacity (mAh/g) | Cycling at 25°C (%) | Cycling at 45°C (%) |
|---|---|---|---|---|---|---|---|---|---|
| Example 10 | 4.1 | 1.3 | 7.8 | 15.7 | 23.33 | 3.24 | 130.1 | 92.60 | 90.2 |
| Example 11 | 4.1 | 1.8 | 11.7 | 16.5 | 23.33 | 3.25 | 129.5 | 92.30 | 90.5 |
| Example 12 | 4.1 | 0.4 | 5.5 | 13.2 | 23.33 | 2.93 | 127.4 | 89.30 | 88.40 |
| Example 13 | 4.1 | 2.5 | 12.1 | 20.8 | 23.33 | 2.89 | 128.1 | 89.70 | 88.10 |
| Example 14 | 4.1 | 1.2 | 9.4 | 18.5 | 23.33 | 3.02 | 128.2 | 90.20 | 89.20 |
| Example 15 | 4.1 | 1.9 | 10.2 | 19.6 | 23.33 | 3.01 | 129.1 | 90.30 | 88.90 |
| Example 16 | 4.1 | 0.4 | 9.6 | 19.2 | 23.33 | 3.11 | 128.8 | 88.20 | 87.40 |
| Example 17 | 4.1 | 2.3 | 10.5 | 21.1 | 23.33 | 2.87 | 128.9 | 88.60 | 87.60 |
| Example 18 | 0.8 | 1.5 | 9.5 | 18.5 | 4.67 | 3.31 | 128.3 | 90.20 | 89.10 |
| Example 19 | 8.2 | 1.5 | 9.5 | 18.5 | 46.67 | 3.29 | 127.9 | 90.10 | 88.70 |
| Example 20 | 4.1 | 1.5 | 9.5 | 18.5 | 23.33 | 3.32 | 129.1 | 92.10 | 90.30 |
| Example 21 | 4.1 | 1.5 | 9.5 | 18.5 | 23.33 | 3.29 | 128.8 | 91.90 | 90.10 |
| Example 22 | 4.1 | 1.5 | 9.5 | 18.5 | 23.33 | 3.27 | 127.9 | 91.60 | 89.80 |
| Example 23 | 4.1 | 1.5 | 9.5 | 18.5 | 23.33 | 3.28 | 127.8 | 91.70 | 89.50 |
| Example 24 | 4.1 | 1.5 | 9.5 | 18.5 | 23.33 | 3.29 | 130.2 | 89.90 | 88.10 |
| Example 25 | 4.1 | 1.5 | 9.5 | 18.5 | 23.33 | 3.27 | 131.1 | 89.20 | 87.50 |
| Example 26 | 4.1 | 1.5 | 9.5 | 18.5 | 23.33 | 3.18 | 130.1 | 91.60 | 89.60 |
| Example 27 | 4.1 | 1.5 | 9.5 | 18.5 | 23.33 | 3.20 | 130.4 | 91.30 | 89.10 |
| Example 28 | 4.1 | 1.5 | 9.5 | 18.5 | / | 3.24 | 128.3 | 90.50 | 88.30 |
| Example 29 | 4.0 | 1.5 | 9.5 | 18.5 | 23.33 | 3.21 | 126.3 | 91.40 | 89.50 |
| Example 30 | 4.1 | 1.5 | 9.5 | 18.5 | 23.33 | 3.27 | 128.1 | 90.30 | 88.80 |
| Example 31 | 4.1 | 1.5 | 9.5 | 18.5 | 23.33 | 3.27 | 127.1 | 90.50 | 88.60 |
| Example 32 | 4.1 | 1.5 | 9.5 | 18.5 | 23.33 | 3.31 | 128.9 | 90.70 | 88.70 |
| Example 33 | 4.1 | 1.5 | 9.5 | 18.5 | 23.33 | 3.28 | 126.2 | 91.90 | 90.10 |
| Example 34 | 4.1 | 1.5 | 9.5 | 18.5 | 23.33 | 3.12 | 127.9 | 91.20 | 89.30 |
| Example 35 | 4.1 | 1.5 | 9.5 | 18.5 | 23.33 | 3.15 | 128.2 | 92.10 | 89.70 |
| Example 36 | 4.1 | 1.5 | 9.5 | 18.5 | 23.33 | 3.17 | 128.6 | 91.80 | 89.60 |
| Example 37 | 4.1 | 1.5 | 9.5 | 18.5 | 23.33 | 3.21 | 129.1 | 91.90 | 89.20 |
| Example 38 | 4.1 | 1.5 | 9.5 | 18.5 | 23.33 | 2.87 | 128.1 | 91.80 | 89.10 |
| Example 39 | 4.1 | 1.5 | 9.5 | 18.5 | 23.33 | 3.01 | 127.9 | 91.50 | 88.80 |
| Example 40 | 4.1 | 1.5 | 9.5 | 18.5 | 23.33 | 2.77 | 126.8 | 88.60 | 86.20 |
| Example 41 | 4.1 | 1.5 | 9.5 | 18.5 | 23.33 | 3.08 | 127.9 | 91.10 | 89.30 |
| Example 42 | 4.1 | 1.5 | 9.5 | 18.5 | 23.33 | 3.09 | 128.1 | 91.20 | 89.10 |
| Example 43 | 4.1 | 1.5 | 9.5 | 18.5 | 23.33 | 3.32 | 129.1 | 92.10 | 90.20 |
| Example 44 | 4.1 | 1.5 | 9.5 | 18.5 | 23.33 | 3.31 | 129.4 | 91.80 | 89.80 |
| Example 45 | 4.1 | 1.5 | 9.5 | 18.5 | 23.33 | 3.29 | 129.5 | 91.40 | 89.30 |
| Example 46 | 4.1 | 1.5 | 9.5 | 18.5 | 23.33 | 3.27 | 129.7 | 91.30 | 89.10 |

(continued)

| | Mass percentage of Cu (%) | $D_v10$ ($\mu$m) | $D_v50$ ($\mu$m) | $D_v90$ ($\mu$m) | e1'/e2' | Powder compacted density (g/cm$^3$) | Initial gram capacity (mAh/g) | Cycling at 25°C (%) | Cycling at 45°C (%) |
|---|---|---|---|---|---|---|---|---|---|
| Example 47 | 4.0 | 1.5 | 9.5 | 18.5 | 23.33 | 3.21 | 128.1 | 90.40 | 88.50 |
| Example 48 | 4.1 | 1.5 | 9.5 | 18.5 | 23.33 | 3.27 | 129.3 | 89.30 | 87.80 |
| Example 49 | 4.1 | 1.5 | 9.5 | 18.5 | 23.33 | 3.25 | 127.9 | 89.9 | 88.40 |
| Example 50 | 4.1 | 1.5 | 9.5 | 18.5 | 23.33 | 3.28 | 128.8 | 90.70 | 88.50 |
| Example 51 | 4.1 | 1.5 | 9.5 | 18.5 | 23.33 | 3.11 | 128.9 | 90.20 | 88.30 |
| Example 52 | 4.1 | 1.5 | 9.5 | 18.5 | 23.33 | 3.15 | 129.2 | 90.10 | 88.70 |
| Example 53 | 4.1 | 1.5 | 9.5 | 18.5 | 23.33 | 3.18 | 129.6 | 90.80 | 88.60 |
| Example 54 | 4.1 | 1.5 | 9.5 | 18.5 | 23.33 | 3.20 | 129.0 | 90.4 | 88.20 |
| Example 55 | 4.1 | 1.5 | 9.5 | 18.5 | 23.33 | 3.28 | 129.1 | 90.80 | 88.90 |
| Example 56 | 4.1 | 1.5 | 9.5 | 18.5 | 23.33 | 2.83 | 128.7 | 89.20 | 87.20 |
| Example 57 | 4.1 | 1.5 | 9.5 | 18.5 | 23.33 | 2.91 | 129.1 | 90.10 | 88.50 |
| Example 58 | 4.1 | 1.5 | 9.5 | 18.5 | 23.33 | 2.79 | 129.3 | 88.70 | 86.90 |
| Comparative Example 1 | / | / | / | / | / | 2.87 | 126.2 | 88.20 | 86.70 |
| Comparative Example 2 | / | / | / | / | / | 2.93 | 128.9 | 83.70 | 81.30 |

From the data comparison between the examples and Comparative Example 1, it can be found that in the examples, after the second positive electrode active material is mixed, the gram capacity of the positive electrode active material composition has a significant improvement as compared to a case where the first positive electrode active material is used alone. From the data comparison between the examples and Comparative Example 2, it can be found that in the examples, after the first positive electrode active material is mixed, the cycling performance of the positive electrode active material composition has a significant improvement as compared to a case where the second positive electrode active material is used alone.

From the data comparison between Example 1 and Examples 34 to 42, it can be found that when the first positive electrode active material and/or second positive electrode active material has a quasi-spherical morphology, the compacted density of the formed composition has a significant improvement as compared to the compacted density of the composition having a flake morphology, and after the roundness of the grains is improved by controlling $D_{104}/D_{003}$, the compacted density and gram capacity can also be further improved.

In addition, from the comparison between Examples 1 to 7, it can be found that as the proportion of the first positive electrode active material and the second positive electrode active material changes, both the gram capacity and the cycling performance change. When the ratio change thereof makes el'/e2' be between 4 and 40, and the mass percentage of copper in the positive electrode active material composition is 3.5% to 4.7%, the positive electrode active material composition has both good gram capacity and cycling performance.

From the comparison between Example 1 and Examples 43 to 46, it can be seen that an appropriate content of coating layer has a significant effect in improving the cycling performance of the positive electrode active material composition.

Although the present application has been described with reference to preferred embodiments, various improvements can be made thereto without departing from the scope of the present application, and equivalents can be used to replace components therein. In particular, as long as there is no structural conflict, the various technical characteristics mentioned in the embodiments can be combined in any manner. The present application is not limited to the specific embodiments disclosed herein, but includes all technical solutions falling within the scope of the claims.

**Claims**

1. A positive electrode active material, comprising a first positive electrode active material and a second positive electrode active material, wherein the first positive electrode active material is a nickel-iron-manganese-copper quaternary sodium battery positive electrode active material; and a chemical formula of the second positive electrode active material is $Na_{a2}[Ni_{b2}Fe_{c2}Mn_{d2}M_{e2}]O_2$, wherein $0.8 \leq a2 < 1$, $0.01 \leq b2 < 0.35$, $0.01 \leq c2 < 0.35$, $0.01 \leq d2 < 0.35$, $0 \leq e2 < 0.1$, $b2+c2+d2+e2=1$, and the M element comprises any one or more of Zn, Ti, Zr, Mg, La, Y, Co, Cr, Al, K, V, Mo, W, Sr, Ta, Nb, or Ca.

2. The positive electrode active material according to claim 1, wherein the second positive electrode active material has one or more of the following characteristics:

    (1) the M element comprises any one or more of Zn, Ti, Zr, Mg, Al, Co, or Ca; and
    (2) $0.9 < a2 < 0.95$, $0.01 \leq b2 < 0.33$, $0.01 \leq c2 < 0.33$, $0.01 \leq d2 < 0.33$, and $0.01 \leq e2 < 0.08$.

3. The positive electrode active material according to claim 1 or 2, wherein $0.02 \leq e2 < 0.08$.

4. The positive electrode active material according to claim 1, wherein a chemical formula of the nickel-iron-manganese-copper quaternary sodium battery positive electrode active material is $Na_{a1}[Ni_{b1}Fe_{c1}Mn_{d1}Cu_{e1}]O_2$, wherein $0.8 \leq a1 < 1$, $0.01 \leq b1 < 0.33$, $0.01 \leq c1 < 0.33$, $0.01 \leq d1 < 0.33$, $0.02 \leq e1 < 0.2$, and $b1+c1+d1+e1=1$.

5. The positive electrode active material according to claim 4, wherein the positive electrode active material has one or more of the following characteristics:

    (1) $0.9 < al < 0.95$, and $0.06 \leq e1 < 0.15$; and
    (2) in each gram of the positive electrode active material, a total molar amount of Cu atoms is el', a total molar amount of the M element is e2', and $0.5 \leq e1'/e2' \leq 200$.

6. The positive electrode active material according to claim 5, wherein $1 \leq e1'/e2' \leq 100$.

7. The positive electrode active material according to claim 6, wherein $4 \leq e1'/e2' \leq 40$.

8. The positive electrode active material according to any one of claims 1 to 7, wherein a mass percentage of the Cu element in the positive electrode active material is 0.5% to 12%.

9. The positive electrode active material according to claim 8, wherein the mass percentage of the Cu element in the positive electrode active material is 3.5% to 4.7%.

10. The positive electrode active material according to any one of claims 1 to 9, wherein an average mass percentage of the Cu element with a particle size less than or equal to $D_v10$ is m1, an average mass percentage of the Cu element with a particle size greater than or equal to $D_v90$ in the positive electrode active material is m2, and $m1 < m2$.

11. The positive electrode active material according to any one of claims 1 to 10, wherein a volume-based particle size of the positive electrode active material satisfies any one or more of the following conditions:

    (1) $D_v10$ is 0.5 $\mu$m to 2 $\mu$m;
    (2) $D_v50$ is 7 $\mu$m to 11 $\mu$m; and
    (3) $D_v90$ is 14 $\mu$m to 20 $\mu$m.

12. The positive electrode active material according to any one of claims 1 to 11, wherein a volume-based particle size distribution curve of the positive electrode active material comprises a first peak type and a second peak type, a peak particle size of the first peak type is $D_1$, a peak particle size of the second peak type is $D_2$, and $D_1 < D_2$.

13. The positive electrode active material according to claim 12, wherein the positive electrode active material has one or more of the following characteristics:

    (1) an average mass percentage of the Cu element with a particle size less than or equal to $D_1$ in the positive electrode active material is m3, an average mass percentage of the Cu element with a particle size greater than or

equal to $D_2$ in the positive electrode active material is m4, and m3<m4; and

(2) peak positions of fitted peaks are set at $D_1$ and $D_2$ respectively, and the Origin software is used to perform a peak fitting process on the volume-based particle size distribution curve of the positive electrode active material based on Gaussian function, to obtain at least a first fitted peak type and a second fitted peak type, wherein a peak particle size of the first fitted peak type is $D_1$, a peak particle size of the second fitted peak type is $D_2$, a particle size of the first positive electrode active material is in a particle size range corresponding to the second fitted peak type, and a particle size of the second positive electrode active material is in a particle size range corresponding to the first fitted peak type.

14. The positive electrode active material according to any one of claims 1 to 13, wherein the positive electrode active material has one or more of the following characteristics:

(1) an average particle size $D_1'$ of the first positive electrode active material is 6 $\mu$m to 15 $\mu$m;
(2) an average particle size $D_2'$ of the second positive electrode active material is 2 $\mu$m to 5.5 $\mu$m;
(3) an average particle size $D_1'$ of the first positive electrode active material is 8 $\mu$m to 12 $\mu$m;
(4) an average particle size $D_2'$ of the second positive electrode active material is 3 $\mu$m to 4 $\mu$m; and
(5) peak positions of fitted peaks are set at $D_1'$ and $D_2'$ respectively, the Origin software is used to perform a peak fitting process on a volume-based particle size distribution curve of the positive electrode active material based on Gaussian function, and the positions of the fitted peaks are kept unchanged during the fitting process, to obtain a small-particle fitted peak type and a large-particle fitted peak type, wherein a particle size of the first positive electrode active material is in a particle size range corresponding to the large-particle fitted peak type, and a particle size of the second positive electrode active material is in a particle size range corresponding to the small-particle fitted peak type.

15. The positive electrode active material according to any one of claims 1 to 14, wherein the positive electrode active material has one or more of the following characteristics:

(1) the first positive electrode active material and the second positive electrode active material each independently comprise a single crystal material or have a single crystal core;
(2) the first positive electrode active material and the second positive electrode active material each independently have an O3 crystal phase;
(3) morphologies of the first positive electrode active material and the second positive electrode active material each independently comprise any one or more of a flaky morphology, a spherical morphology, or a quasi-spherical morphology;
(4) in XRD spectra of the first positive electrode active material and the second positive electrode active material, a (003) diffraction peak, a (101) diffraction peak, and a (104) diffraction peak correspond to grain sizes of $D_{003}$, $D_{101}$, and $D_{104}$ respectively, which satisfy $1.5 < D_{104}/D_{003} < 1.7$ or satisfy $0.9 < D_{101}/D_{003} < 1.2$; and
(5) a mass ratio of the first positive electrode active material and the second positive electrode active material is 5:5 to 9:1.

16. The positive electrode active material according to claim 15, wherein the positive electrode active material has one or more of the following characteristics:

(1)

$$1.55 < D_{104}/D_{003} < 1.65;$$

(2)

$$1.05 < D_{101}/D_{003} < 1.15;$$

and
(3) a mass ratio of the first positive electrode active material and the second positive electrode active material is 6:4 to 8:2.

17. The positive electrode active material according to any one of claims 1 to 16, wherein the positive electrode active material has one or more of the following characteristics:

(1) at least part of a surface of the first positive electrode active material and at least part of a surface of the second positive electrode active material each independently have a coating layer, and the coating layer comprises a sodium phosphate salt; and
(2) a powder compacted density of the positive electrode active material under a pressure of 3 tons is greater than or equal to 3.1 $g/cm^3$.

18. The positive electrode active material according to claim 17, wherein

(1) the sodium phosphate salt comprises $NaH_2PO_4$, $Na_2HPO_4$, $Na_3PO_4$, or $(NaPO_3)n$;
(2) a weight content of the sodium phosphate salt in the positive electrode active material is 1000 ppm to 30000 ppm;
(3) a weight content of the sodium phosphate salt in the positive electrode active material is 5000 ppm to 20000 ppm; and
(4) a powder compacted density of the positive electrode active material under a pressure of 3 tons is greater than or equal to 3.3 $g/cm^3$.

19. A preparation method of the positive electrode active material according to any one of claims 1 to 18, wherein the preparation method comprises:

preparing a first positive electrode active material: mixing a Ni salt solution, a Fe salt solution, a Cu salt solution, and an Mn salt solution at a set ratio to form a first mixed salt solution; adding the first mixed salt solution, a first precipitant, and a first complexing agent to a reaction vessel; controlling a pH value and a reaction temperature of the materials in the reaction vessel to undergo a co-precipitation reaction to obtain a first positive electrode active material precursor, wherein the pH value is recorded as $pH_1$, and $pH_1$ is 9 to 12; mixing the first positive electrode active material precursor with a first sodium salt in proportion to form a first mixture; and performing a first calcination treatment on the first mixture to obtain the first positive electrode active material;
preparing a second positive electrode active material: mixing a Ni salt solution, a Fe salt solution, a Mn salt solution, and an optional salt solution containing an M element at a set ratio to form a second mixed salt solution; pumping the second mixed salt solution, a second precipitant, and a second complexing agent into a reaction vessel; controlling a pH value and a reaction temperature of the materials in the reaction vessel to undergo a co-precipitation reaction to obtain a second positive electrode active material precursor, wherein the pH value is recorded as $pH_2$, and $pH_2$ is 11 to 14; mixing the second positive electrode active material precursor with a second sodium salt in proportion to form a second mixture; and performing a second calcination treatment on the first mixture to obtain the second positive electrode active material; and
mixing the first positive electrode active material and the second positive electrode active material to obtain the positive electrode active material.

20. The preparation method according to claim 19, wherein
the Ni salt, Fe salt, Mn salt, Cu salt, and M salt each comprise one or a mixture of several of their respective sulfates, nitrates, oxalates, or chlorides; the first precipitant and the second precipitant each independently comprise an aqueous solution of one or a mixture of several of sodium hydroxide, sodium carbonate, potassium carbonate, or potassium hydroxide; and the first complexing agent and the second complexing agent each independently comprise an aqueous solution of one or a mixture of several of ammonia water, ammonium chloride, ammonium sulfate, ammonium carbonate, ammonium bicarbonate, or citric acid.

21. The preparation method according to claim 19 or 20, wherein the first calcination treatment comprises a first primary calcination process performed at a first temperature and a first secondary calcination process performed at a second temperature, and the first temperature is lower than the second temperature; and/or a molar ratio of sodium in the first sodium salt to metal elements in the first positive electrode active material precursor is 0.8 to 0.95.

22. The preparation method according to claim 20 or 21, wherein the preparation method has one or more of the following characteristics:

(1) a concentration of the first complexing agent is 1 mol/L to 2 mol/L;
(2) a concentration of the second complexing agent is 0.5 mol/L to 1 mol/L;
(3) a first temperature of the first primary calcination is 700°C to 900°C, and a temperature maintaining time is 3 h to 10 h;
(4) a second temperature of the first secondary calcination is 850°C to 1200°C, and a temperature maintaining time is 8 h to 20 h;
(5) a second temperature of the first secondary calcination is 900°C to 1000°C;
(6) a temperature maintaining time of the first secondary calcination is 12 h to 18 h; and
(7) a molar ratio of sodium in the first sodium salt to metal elements in the first positive electrode active material precursor is 0.9 to 0.93.

23. The preparation method according to any one of claims 19 to 22, wherein the second calcination treatment comprises a second primary calcination process performed at a third temperature and a second secondary calcination process performed at a fourth temperature, and the third temperature is higher than the fourth temperature; and/or a molar ratio of sodium in the second sodium salt to metal elements in the second positive electrode active material precursor is 0.8 to 0.95.

24. The preparation method according to claim 23, wherein the preparation method has one or more of the following characteristics:

(1) a third temperature of the second primary calcination is 850°C to 1000°C, and a temperature maintaining time is 3 h to 8 h;
(2) a fourth temperature of the second secondary calcination is 700°C to 950°C, and a temperature maintaining time is 8 h to 20 h;
(3) a fourth temperature of the second secondary calcination is 800°C to 920°C;
(4) a temperature maintaining time of the second secondary calcination is 9 h to 15 h; and
(5) a molar ratio of sodium in the second sodium salt to metal elements in the second positive electrode active material precursor is 0.9 to 0.93.

25. The preparation method according to any one of claims 19 to 24, wherein the preparation method further comprises:

mixing a phosphate compound, the first positive electrode active material, and the second positive electrode active material to form a mixed base material; and
performing third calcination on the mixed base material to obtain the positive electrode active material.

26. The preparation method according to claim 25, wherein the preparation method has one or more of the following characteristics:

(1) a ratio of a weight of the phosphate compound to a total weight of the first positive electrode active material and the second positive electrode active material is 1000 ppm to 30000 ppm;
(2) a ratio of a weight of the phosphate compound to a total weight of the first positive electrode active material and the second positive electrode active material is 5000 ppm to 20000 ppm;
(3) the phosphate compound comprises one or a mixture of several of $NH_4H_2PO_4$, $(NH_4)_2HPO_4$, $(NH_4)_2H_2P_2O_7$, $NH_4H_3P_2O_7$, $NaH_2PO_4$, $Na_2HPO_4$, $Na_3PO_4$, or $(NaPO_3)n$;
(4) the third calcination is performed at a temperature of 200°C to 500°C for 5 h to 15 h;
(5) the third calcination is performed at a temperature of 300°C to 400°C; and
(6) the third calcination is performed for 7 h to 10 h.

27. A positive electrode sheet, comprising a positive electrode current collector and a positive electrode film layer disposed on at least one side of the positive electrode current collector, wherein the positive electrode film layer comprises a positive electrode active material, and the positive electrode active material comprises the positive electrode active material according to any one of claims 1 to 18.

28. The positive electrode sheet according to claim 27, wherein a compacted density of the positive electrode sheet is greater than or equal to 3.1 g/cm$^3$.

29. A secondary battery, comprising a positive electrode sheet, a negative electrode sheet, and an electrolyte, wherein the positive electrode sheet comprises a positive electrode active material, and the positive electrode active material comprises the positive electrode active material according to any one of claims 1 to 18.

30. An electric apparatus, comprising an electric apparatus, wherein the electric apparatus comprises the secondary battery according to claim 29.

FIG. 1

FIG. 2

FIG. 3

FIG. 4

5

FIG. 5

5

53

52
52

51

FIG. 6

4    5    5

5

FIG. 7

1

FIG. 8

1

2

4 4 4
4
4
4

3

FIG. 9

FIG. 10

## INTERNATIONAL SEARCH REPORT

| International application No. |
|---|
| **PCT/CN2024/085929** |

| A. CLASSIFICATION OF SUBJECT MATTER |
|---|
| H01M4/505(2010.01)i; H01M4/525(2010.01)i; H01M4/485(2010.01)i; H01M10/054(2010.01)i |

According to International Patent Classification (IPC) or to both national classification and IPC

| B. FIELDS SEARCHED |
|---|
| Minimum documentation searched (classification system followed by classification symbols) |
| IPC: H01M |

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 钠离子电池, 正极, 阴极, 第一, 第二, 两, 镍, 铁, 锰, 铜, sodium ion battery, positive, cathode, first, second, two, nickel, iron, manganese, copper

| C. DOCUMENTS CONSIDERED TO BE RELEVANT | | |
|---|---|---|
| Category* | Citation of document, with indication, where appropriate, of the relevant passages | Relevant to claim No. |
| X | CN 116154138 A (BEIJING EASPRING MATERIAL TECHNOLOGY CO., LTD. et al.) 23 May 2023 (2023-05-23) description, paragraphs 6-199, and figures 1-4 | 1-30 |
| X | CN 116282228 A (JINGMEN GEM CO., LTD. et al.) 23 June 2023 (2023-06-23) description, paragraphs 8-101 | 1-30 |
| X | CN 115057482 A (CENTRAL SOUTH UNIVERSITY) 16 September 2022 (2022-09-16) description, paragraphs 3-36 | 1-30 |
| X | CN 116111083 A (ZHUHAI COSMX BATTERY CO., LTD.) 12 May 2023 (2023-05-12) description, paragraphs 4-147 | 1-30 |
| A | CN 111435741 A (CONTEMPORARY AMPEREX TECHNOLOGY CO., LTD.) 21 July 2020 (2020-07-21) entire document | 1-30 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **10 July 2024** | **15 July 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/085929**

| Patent document cited in search report | | | Publication date (day/month/year) | Patent family member(s) | | | Publication date (day/month/year) |
|---|---|---|---|---|---|---|---|
| CN | 116154138 | A | 23 May 2023 | None | | | |
| CN | 116282228 | A | 23 June 2023 | None | | | |
| CN | 115057482 | A | 16 September 2022 | CN | 115057482 | B | 14 July 2023 |
| CN | 116111083 | A | 12 May 2023 | None | | | |
| CN | 111435741 | A | 21 July 2020 | EP | 3907793 | A1 | 10 November 2021 |
| | | | | EP | 3907793 | A4 | 16 March 2022 |
| | | | | EP | 3907793 | C0 | 03 January 2024 |
| | | | | WO | 2020143533 | A1 | 16 July 2020 |
| | | | | US | 2021336262 | A1 | 28 October 2021 |
| | | | | EP | 3907793 | B1 | 03 January 2024 |
| | | | | CN | 115472818 | A | 13 December 2022 |
| | | | | CN | 115472819 | A | 13 December 2022 |
| | | | | CN | 115498177 | A | 20 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311186588X

**Non-patent literature cited in the description**

- *GB/T 24533-2019*